# FASCICULE DE BREVET EUROPEEN

(11) **EP 4 507 920 B1**
(45) Date de publication et mention de la délivrance du brevet: **04.02.2026**
(21) Numéro de dépôt: 23712558.8
(22) Date de dépôt: 22.03.2023
(51) Int. Cl.: B60L 58/40, E02F 9/20

(54) **PROCÉDÉ DE COMMANDE D'UNE PILE À COMBUSTIBLE D'UNE MACHINE DE TRAVAIL**
VERFAHREN ZUR STEUERUNG EINER BRENNSTOFFZELLE EINER ARBEITSMASCHINE
METHOD FOR CONTROLLING A FUEL CELL OF A WORK MACHINE

(30) Priorité: 12.04.2022 FR 2203357
(43) Date de publication de la demande: 19.02.2025
(73) Titulaire: MANITOU BF, 44150 Ancenis (FR)
(72) Inventeur: BREHIER, Valentin, 44150 Ancenis (FR); SCHELL, Xavier, 44150 Ancenis (FR)
(74) Mandataire: Loyer & Abello
(86) Numéro de dépôt international: PCT/EP2023/057358
(87) Numéro de publication internationale: WO 2023/198419

(56) Documents cités:
- NO-A1- 20 200 361
- US-A1- 2014 336 855
- US-B2- 9 845 587

## Description

### Domaine technique

L'invention se rapporte au domaine des machines de travail comportant un dispositif de manutention de charge, un moteur électrique configuré pour déplacer la machine de travail ou actionner le dispositif de manutention de charge, une unité de stockage d'énergie configurée pour alimenter le moteur électrique en énergie électrique et une pile à combustible générant de l'énergie électrique destinée à alimenter le moteur électrique. Une telle machine peut notamment être réalisée sous la forme de chariot à bras télescopique, pelleteuse mécanique, chargeuse à godet ou autre.

L'invention se rapporte plus particulièrement au domaine des procédés de commande d'une pile à combustible d'une machine de travail.

### Arrière-plan technologique

Il est connu de l'art antérieur et notamment du document WO2008041892 des engins de chantier comportant une source de puissance, qui peut être un moteur à combustion ou une pile à combustible, plusieurs systèmes consommateurs de puissance reliés à la source de puissance. L'engin comprend également une source de puissance externe, qui peut être une batterie.

Ce document concerne de plus un procédé pour actionner la machine de travail, qui prévoit à la suite d'une détection d'un paramètre opérationnel de demande de puissance comme un appui sur une pédale de frein, d'équilibrer une puissance fournie par rapport à la puissance demandée conformément à un modèle de prévision temps réel prenant en compte la détection du paramètre opérationnel. Lorsque la puissance demandée est supérieure à la puissance fournie, l'équilibrage se fait en ajoutant au couple de la source de puissance, le couple de la source de puissance externe. La source de puissance externe permet ainsi notamment de fournir la puissance additionnelle prédite par le modèle de prévision, au moins temporairement pour laisser un temps suffisant à la source principale d'atteindre la puissance nécessaire.

Toutefois, un tel procédé est complexe à mettre en œuvre et nécessite de puissants calculateurs pour calculer en temps réel la puissance prévisionnelle de l'engin. De plus, avec un tel procédé et dans le cas d'une pile à combustible comme source de puissance, il est prévu de constamment changer la consigne de la pile dès que la puissance demandée est modifiée, ce qui peut détériorer prématurément la pile à combustible.

Le document US9845587B2 divulgue un procédé de commande d'une pile à combustion d'une machine de travail selon le préambule de la revendication 1.

### Résumé

Une idée à la base de l'invention est de simplifier la commande de la pile à combustible.

Selon un mode de réalisation, l'invention fournit un procédé de commande d'une pile à combustible d'une machine de travail comportant un dispositif de manutention de charge formé d'un bras et d'un outil, au moins un moteur électrique qui est configuré pour déplacer la machine de travail et/ou actionner le dispositif de manutention de charge, une unité de stockage d'énergie configurée pour alimenter en énergie l'au moins un moteur électrique et une pile à combustible qui est reliée à l'unité de stockage d'énergie et qui est configurée pour charger l'unité de stockage d'énergie, un premier organe de commande configuré pour commander le moteur électrique et un deuxième organe de commande configuré pour commander le dispositif de manutention de charge, le procédé comportant les étapes suivantes :
- déterminer un mode de fonctionnement de la machine de travail parmi au moins deux modes de fonctionnement en fonction d'au moins une variable choisie parmi:
   une variable « présence conducteur » représentative de la présence d'une personne sur un siège conducteur de la machine de travail ;
   une variable « vitesse machine » représentative de la vitesse de déplacement de la machine de travail;
   une variable « activité du mode chargement » représentative de l'activité du dispositif de manutention de charge ;
   une variable « stabilisateur » représentative de la position d'un ou plusieurs stabilisateurs ;
   une variable « recharge » représentative de l'état d'un bouton d'actionnement d'un mode recharge ; et
   une variable « activité de commande » représentative de l'activité du premier organe de commande et/ou du deuxième organe de commande ;
- déterminer un état de charge de l'unité de stockage de l'énergie ; et
- commander la pile à combustible avec une consigne prédéterminée en fonction de l'état de charge de l'unité de stockage d'énergie et du mode de fonctionnement de la machine de travail ainsi déterminés.

Grâce à ces caractéristiques, le procédé de commande permet de commander simplement la pile à combustible au moyen de l'identification de modes de fonctionnement et de l'état de charge de l'unité de stockage d'énergie. En effet, la détermination du mode de fonctionnement permet d'évaluer simplement la puissance qui va être demandée à l'unité de stockage d'énergie au moyen de différentes variables de sorte à adapter la consigne de la pile à combustible pour charger l'unité de stockage selon le besoin. De plus, le procédé permet d'adapter la consigne de pile à combustible en fonction de l'état de charge de l'unité de stockage de l'énergie, par exemple en prévoyant une puissance de consigne de la pile à combustible plus ou moins importante selon que l'unité de stockage d'énergie soit faiblement chargée, moyennement chargée ou pleinement chargée.

Selon des modes de réalisation, un tel procédé peut comporter une ou plusieurs des caractéristiques suivantes.

Selon un mode de réalisation, la machine de travail comporte un premier moteur électrique qui est configuré pour déplacer la machine de travail et un deuxième moteur électrique qui est configuré pour actionner le dispositif de manutention de charge.

Selon un mode de réalisation, le mode de fonctionnement de la machine de travail peut également être déterminé en fonction d'une variable « vitesse moteur » représentative de la vitesse du deuxième moteur électrique qui est configuré pour actionner le dispositif de manutention de charge.

Selon un mode de réalisation, l'un des modes de fonctionnement est un mode ralenti qui est déterminé au moyen de la variable « présence conducteur » , de la variable « activité de commande » et optionnellement de la variable « vitesse moteur » précitée.

Selon un mode de réalisation, le procédé comprend les étapes suivantes :
- recevoir la variable « présence conducteur » et la variable « activité de commande », la variable « présence conducteur » étant apte à prendre une première valeur lorsqu'une personne est présente sur un siège conducteur de la machine et une deuxième valeur lorsqu'aucune personne n'est présente sur le siège conducteur, la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active ;
- déterminer que le mode de fonctionnement est le mode ralenti lorsque la variable « activité de commande » est égale à la première valeur et que la variable « présence conducteur » est égale à la deuxième valeur.

Selon un mode de réalisation, le procédé comprend les étapes suivantes :
- recevoir la variable « présence conducteur », la variable « activité de commande » et la variable « vitesse moteur », la variable « présence conducteur » étant apte à prendre une première valeur lorsqu'une personne est présente sur un siège conducteur de la machine et une deuxième valeur lorsqu'aucune personne n'est présente sur le siège conducteur, la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active ;
- comparer la variable « vitesse moteur » à un seuil de vitesse moteur prédéterminé,
- déterminer que le mode de fonctionnement est le mode ralenti lorsque la variable « vitesse moteur » présente une valeur inférieure au seuil de vitesse moteur prédéterminé, la variable « activité de commande » est égale à la première valeur et la variable « présence conducteur » est égale à la deuxième valeur.

Selon un mode de réalisation, l'un des modes de fonctionnement est un mode ralenti déterminé au moyen de la variable « recharge », et de la variable « activité de commande », et optionnellement de la variable « vitesse moteur ».

Selon un mode de réalisation, le procédé comprend les étapes suivantes :
- recevoir la variable « recharge »et la variable « activité de commande », la variable « recharge » étant apte à prendre une première valeur lorsque le bouton d'actionnement du mode recharge est à l'état actif et une deuxième valeur lorsque le bouton d'actionnement du mode recharge est à l'état inactif, la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active ;
- déterminer que le mode de fonctionnement est le mode ralenti lorsque la variable « activité de commande » est égale à la première valeur et que la variable « recharge » est égale à la deuxième valeur.

Selon un mode de réalisation, le procédé comprend les étapes suivantes :
- recevoir la variable « recharge », la variable « activité de commande » et la variable « vitesse moteur », la variable « recharge » étant apte à prendre une première valeur lorsque le bouton d'actionnement du mode recharge est à l'état actif et une deuxième valeur lorsque le bouton d'actionnement du mode recharge est à l'état inactif, la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active ;
- comparer la variable « vitesse moteur » à un seuil de vitesse moteur prédéterminé,
- déterminer que le mode de fonctionnement est le mode ralenti lorsque la variable « vitesse moteur » présente une valeur inférieure au seuil de vitesse moteur prédéterminé, la variable « activité de commande » est égale à la première valeur et la variable « recharge » est égale à la deuxième valeur.

Selon un mode de réalisation, le premier organe de commande est un sélecteur à trois positions avant/neutre/arrière, le sélecteur étant apte à prendre trois positions la position neutre, une position avant et une position arrière, le sélecteur étant dans une position active dans la position avant qui est configurée pour délivrer une demande de de déplacement en marche avant de la machine de travail, et dans la position arrière qui est configurée pour délivrer une demande de déplacement en marche arrière de la machine de travail.

Selon un mode de réalisation, le deuxième organe de commande est un joystick apte à être basculé vers le haut, vers le bas, vers la droite ou vers la gauche. Le basculement du joystick vers le haut délivre une demande d'abaissement du bras, le basculement vers le bas délivre une demande de monter du bras, le basculement vers la gauche et vers la droite délivre une demande d'inclinaison de l'outil dans un sens ou dans l'autre.

Selon un mode de réalisation, lorsque le premier organe de commande est un sélecteur à trois positions et le deuxième organe de commande est un joystick, la variable « activité de commande » est apte à prendre la première valeur lorsque le sélecteur à trois positions est dans la position neutre et le joystick est dans la position neutre, non basculée par un utilisateur, et est apte à prendre une deuxième valeur lorsque le sélecteur à trois positions est dans la position avant ou la position arrière, ou le joystick a été basculé par un utilisateur par rapport à la position neutre.

Selon un mode de réalisation, la variable « présence conducteur » est obtenue à l'aide d'un capteur de présence configuré pour délivrer un signal lorsqu'une mesure de masse sur le siège supérieure à un seuil de masse déterminé est détecté sur le siège, le procédé comportant une étape de comparaison d'une mesure de la masse exercée sur le siège à une valeur du seuil de masse déterminé, la valeur du seuil de masse déterminé étant par exemple supérieur à 10 kg, de manière plus préférentielle supérieure à 15 kg, et une étape d'attribution à la variable « présence conducteur » de la première valeur lorsque la mesure de masse est supérieure audit seuil de masse prédéterminé.

Selon un mode de réalisation, le moteur électrique comporte un arbre moteur et la variable « vitesse moteur » est mesurée à l'aide d'un capteur de vitesse délivrant une mesure représentative de la vitesse de rotation de l'arbre moteur du moteur électrique, par exemple un capteur capacitif à effet Hall.

Selon un mode de réalisation, le seuil de vitesse moteur prédéterminé est égal à la valeur de vitesse du moteur électrique en régime ralenti additionnée d'une constante, ledit seuil de vitesse moteur prédéterminé étant par exemple compris entre 50 tr/min et 1000 tr/min, de préférence compris entre 100 tr/min et 500 tr/min, par exemple égal à 300 tr/min.

Selon un mode de réalisation, l'un des modes de fonctionnement est un mode recharge qui est déterminé au moyen de la variable « présence conducteur », de la variable « recharge », de la variable « activité de commande », et optionnellement de la variable « vitesse moteur ».

Selon un mode de réalisation, le procédé comprend les étapes suivantes :
- recevoir la variable « présence conducteur », la variable « activité de commande », et la variable « recharge », la variable « présence conducteur » étant apte à prendre une première valeur lorsqu'une personne est présente sur un siège de la machine et une deuxième valeur lorsqu'aucune personne n'est présente sur le siège , la variable « recharge » étant apte à prendre une première valeur lorsque le bouton d'actionnement du mode recharge est à l'état actif et une deuxième valeur lorsque le bouton d'actionnement du mode recharge est à l'état inactif, la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active ;
- déterminer que le mode de fonctionnement est le mode recharge lorsque la variable « activité de commande » est égale à la première valeur, la variable « présence conducteur » est égale à la première valeur et la valeur « recharge » est égale à la première valeur.

Selon un mode de réalisation, le procédé comprend les étapes suivantes :
- recevoir la variable « présence conducteur », la variable « activité de commande », la variable « vitesse moteur » et la variable « recharge », la variable « présence conducteur » étant apte à prendre une première valeur lorsqu'une personne est présente sur un siège de la machine et une deuxième valeur lorsqu'aucune personne n'est présente sur le siège , la variable « recharge » étant apte à prendre une première valeur lorsque le bouton d'actionnement du mode recharge est à l'état actif et une deuxième valeur lorsque le bouton d'actionnement du mode recharge est à l'état inactif, la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active ;
- comparer la variable « vitesse moteur » à un seuil de vitesse moteur prédéterminé,
- déterminer que le mode de fonctionnement est le mode recharge lorsque la variable « vitesse moteur » présente une valeur inférieure au seuil de vitesse moteur prédéterminé, la variable « activité de commande » est égale à la première valeur, la variable « présence conducteur » est égale à la première valeur et la valeur « recharge » est égale à la première valeur.

Selon un mode de réalisation, l'un des modes de fonctionnement est un mode route qui est déterminé au moyen de la variable « vitesse machine », optionnellement de la variable « vitesse moteur », et optionnellement de la variable « activité de commande ».

Selon un mode de réalisation, le procédé comprend les étapes suivantes :
- recevoir la variable « vitesse machine »,
- comparer la variable « vitesse machine » à un seuil de vitesse machine prédéterminé,
- déterminer que le mode de fonctionnement est le mode route lorsque la variable « vitesse machine » présente une valeur supérieure au seuil de vitesse machine prédéterminé.

Selon un mode de réalisation, le procédé comprend les étapes suivantes :
- recevoir la variable « vitesse machine »et la variable « activité de commande », la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active
- comparer la variable « vitesse machine » à un seuil de vitesse machine prédéterminé,
- déterminer que le mode de fonctionnement est le mode route lorsque la variable « activité de commande » est égale à la deuxième valeur et la variable « vitesse machine » présente une valeur supérieure au seuil de vitesse machine prédéterminé.

Selon un mode de réalisation, le procédé comprend les étapes suivantes :
- recevoir la variable « vitesse machine », la variable « activité de commande » et la variable « vitesse moteur », la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active ;
- comparer la variable « vitesse moteur » à un seuil de vitesse moteur prédéterminé,
- comparer la variable « vitesse machine » à un seuil de vitesse machine prédéterminé,
- déterminer que le mode de fonctionnement est le mode route lorsque la variable « vitesse moteur » présente une valeur supérieure au seuil de vitesse moteur prédéterminé et la variable « vitesse machine » présente une valeur supérieure au seuil de vitesse machine prédéterminé, ou lorsque la valeur de la variable « activité de commande » est égale à la deuxième valeur et la variable « vitesse machine » présente une valeur supérieure au seuil de vitesse machine prédéterminé.

Selon un mode de réalisation, la valeur « vitesse machine » est mesurée à l'aide d'un capteur de vitesse, par exemple un capteur capacitif à effet Hall situé dans une boite de vitesse ou sur un essieu arrière.

Selon un mode de réalisation, le seuil de vitesse machine prédéterminé est par exemple compris entre 10 et 30 km/h, de préférence compris entre 10 et 20 km/h, par exemple égal à 16 km/h.

Selon un mode de réalisation, l'un des modes de fonctionnement est un mode chargement qui est déterminé au moyen de la variable « vitesse machine », de la variable « activité de commande », de la variable « activité du mode chargement », et optionnellement de la variable « vitesse moteur ».

Selon un mode de réalisation, le procédé comprend les étapes suivantes :
- recevoir la variable « vitesse machine », la variable « activité de commande », et la variable « activité du mode chargement », la variable « activité du mode chargement » étant apte à prendre une première valeur en réponse à la détection d'une consigne de débit hydraulique d'un vérin d'inclinaison de l'outil compris dans une plage prédéterminée pendant une durée supérieure à un seuil de durée prédéterminé et à la détection d'un angle du bras compris dans une plage prédéterminée, et à prendre une deuxième valeur dans le cas contraire, la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active ;
- comparer la variable « vitesse machine » à un seuil de vitesse machine prédéterminé,
- déterminer que le mode de fonctionnement est le mode chargement lorsque la variable « activité de commande » est égale à la deuxième valeur, la variable « vitesse machine » présente une valeur inférieure au seuil de vitesse machine prédéterminé, et la variable « activité du mode chargement » est égale à la première valeur.

Selon un mode de réalisation, le procédé comprend les étapes suivantes :
- recevoir la variable « vitesse machine », la variable « vitesse moteur », la variable « activité de commande », et la variable « activité du mode chargement », la variable « activité du mode chargement » étant apte à prendre une première valeur en réponse à la détection d'une consigne de débit hydraulique d'un vérin d'inclinaison de l'outil compris dans une plage prédéterminée pendant une durée supérieure à un seuil de durée prédéterminé et à la détection d'un angle du bras compris dans une plage prédéterminée et à prendre une deuxième valeur dans le cas contraire, la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active ;°
- comparer la variable « vitesse moteur » à un seuil de vitesse moteur prédéterminé,
- comparer la variable « vitesse machine » à un seuil de vitesse machine prédéterminé,
- déterminer que le mode de fonctionnement est le mode chargement lorsque la variable « vitesse moteur » présente une valeur supérieure au seuil de vitesse moteur prédéterminé, la variable « vitesse machine » présente une valeur inférieure au seuil de vitesse machine prédéterminé, et la variable « activité du mode chargement » est égale à la première valeur, ou lorsque la valeur de la variable « activité de commande » est égale à la deuxième valeur, la variable « vitesse machine » présente une valeur inférieure au seuil de vitesse machine prédéterminé, et la variable « activité du mode chargement » est égale à la première valeur.

Selon un mode de réalisation, la détection d'une consigne de débit hydraulique d'un vérin d'inclinaison de l'outil est réalisée au moyen d'un capteur de débit monté sur un vérin d'inclinaison. La consigne de débit hydraulique du vérin d'inclinaison est par exemple comprise entre -100% et -30% du débit maximal prédéterminé du vérin d'inclinaison et entre 30 et 100% du débit maximal prédéterminé du vérin d'inclinaison. Les valeurs négatives de débit correspondent à l'inclinaison de l'outil dans un sens de chargement et les valeurs positives correspondent à l'inclinaison de l'outil dans un sens de déversement. Le seuil de durée prédéterminé est par exemple supérieur à 1 seconde (sec), de préférence compris entre 1 et 2 sec, de manière plus préférentielle égale à 1,5 sec.

Selon un mode de réalisation, la détection d'un angle du bras est réalisée au moyen d'un capteur d'angle situé à proximité du bras. La plage prédéterminée est par exemple comprise entre 0 et 10° et entre 30 et 70°.

Selon un mode de réalisation, l'un des modes de fonctionnement est un mode manutention déterminé au moyen de la variable « vitesse machine », de la variable « activité du mode chargement », de la variable « stabilisateur », de la variable « activité de commande », et optionnellement de la variable « vitesse moteur ».

Selon un mode de réalisation, le procédé comprend les étapes suivantes :
- recevoir la variable « vitesse machine », la variable « activité de commande », la variable « activité du mode chargement », et la variable « stabilisateur » ; la variable « activité du mode chargement » étant apte à prendre une première valeur en réponse à la détection d'une consigne de débit hydraulique d'un vérin d'inclinaison de l'outil compris dans une plage prédéterminée pendant une durée supérieure à un seuil de durée prédéterminé et à la détection d'un angle du bras compris dans une plage prédéterminée, et à prendre une deuxième valeur dans le cas contraire ; la variable « stabilisateur » étant apte à prendre une première valeur lorsqu'au moins un stabilisateur est dans une position de fonctionnement et étant apte à prendre une deuxième valeur lorsqu'aucun stabilisateur n'est dans la position de fonctionnement, la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active;
- comparer la variable « vitesse machine » à un seuil de vitesse machine prédéterminé,
- déterminer que le mode de fonctionnement est le mode manutention lorsque la variable « activité de commande » est égale à la deuxième valeur, la variable « vitesse machine » présente une valeur inférieure au seuil de vitesse machine prédéterminé, la variable « activité du dispositif de manutention de charge » est égale à la première valeur, et la variable « stabilisateur » est égale à la deuxième valeur.

Selon un mode de réalisation, le procédé comprend les étapes suivantes :
- recevoir la variable « vitesse machine », la variable « vitesse moteur », la variable « activité de commande », la variable « activité du mode chargement », et la variable « stabilisateur » ; la variable « activité du mode chargement » étant apte à prendre une première valeur en réponse à la détection d'une consigne de débit hydraulique d'un vérin d'inclinaison de l'outil compris dans une plage prédéterminée pendant une durée supérieure à un seuil de durée prédéterminé et à la détection d'un angle du bras compris dans une plage prédéterminée, et à prendre une deuxième valeur dans le cas contraire ; la variable « stabilisateur » étant apte à prendre une première valeur lorsqu'au moins un stabilisateur est dans une position de fonctionnement et étant apte à prendre une deuxième valeur lorsqu'aucun stabilisateur n'est dans la position de fonctionnement, la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active ;
- comparer la variable « vitesse moteur » à un seuil de vitesse moteur prédéterminé,
- comparer la variable « vitesse machine » à un seuil de vitesse machine prédéterminé,
- déterminer que le mode de fonctionnement est le mode manutention lorsque la variable « vitesse moteur » présente une valeur supérieure au seuil de vitesse moteur prédéterminé, la variable « vitesse machine » présente une valeur inférieure au seuil de vitesse machine prédéterminé, la variable « activité du dispositif de manutention de charge » est égale à la première valeur, et la variable « stabilisateur » est égale à la deuxième valeur ou lorsque la valeur de la variable « activité de commande » est égale à la deuxième valeur, la variable « vitesse machine » présente une valeur inférieure au seuil de vitesse machine prédéterminé, la variable « activité du dispositif de manutention de charge » est égale à la première valeur, et la variable « stabilisateur » est égale à la deuxième valeur.

Selon un mode de réalisation, l'un des modes de fonctionnement est un mode manutention sur stabilisateur qui est déterminé au moyen de la variable « vitesse machine », de la variable « activité du mode chargement », de la variable « stabilisateur », de la variable « activité de commande » et optionnellement de la variable « vitesse moteur ».

Selon un mode de réalisation, le procédé comprend les étapes suivantes :
- recevoir la variable « vitesse machine », la variable « activité de commande », la variable « activité du mode chargement », et la variable « stabilisateur » ; la variable « activité du mode chargement » étant apte à prendre une première valeur en réponse à la détection d'une consigne de débit hydraulique d'un vérin d'inclinaison de l'outil compris dans une plage prédéterminée pendant une durée supérieure à un seuil de durée prédéterminé et à la détection d'un angle du bras compris dans une plage prédéterminée ; la variable « stabilisateur » étant apte à prendre une première valeur lorsqu'au moins un stabilisateur est dans une position de fonctionnement et étant apte à prendre une deuxième valeur lorsqu'aucun stabilisateur n'est dans la position de fonctionnement, la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active ;
- comparer la variable « vitesse machine » à un seuil de vitesse machine prédéterminé,
- déterminer que le mode de fonctionnement est le mode manutention sur stabilisateur lorsque la variable « activité de commande » est égale à la deuxième valeur, la variable « vitesse machine » présente une valeur inférieure au seuil de vitesse machine prédéterminé, la variable « activité du dispositif de manutention de charge » est égale à la première valeur, et la variable « stabilisateur » est égale à la première valeur.

Selon un mode de réalisation, le procédé comprend les étapes suivantes :
- recevoir la variable « vitesse machine », la variable « vitesse moteur », la variable « activité de commande », la variable « activité du mode chargement », et la variable « stabilisateur » ; la variable « activité du mode chargement » étant apte à prendre une première valeur en réponse à la détection d'une consigne de débit hydraulique d'un vérin d'inclinaison de l'outil compris dans une plage prédéterminée pendant une durée supérieure à un seuil de durée prédéterminé et à la détection d'un angle du bras compris dans une plage prédéterminée ; la variable « stabilisateur » étant apte à prendre une première valeur lorsqu'au moins un stabilisateur est dans une position de fonctionnement et étant apte à prendre une deuxième valeur lorsqu'aucun stabilisateur n'est dans la position de fonctionnement, la variable « activité de commande » étant apte à prendre une première valeur lorsque le premier organe de commande et le deuxième organe de commande sont dans une position neutre et étant apte à prendre une deuxième valeur lorsque le premier organe de commande ou le deuxième organe de commande est dans une position active;
- comparer la variable « vitesse moteur » à un seuil de vitesse moteur prédéterminé,
- comparer la variable « vitesse machine » à un seuil de vitesse machine prédéterminé,
- déterminer que le mode de fonctionnement est le mode manutention sur stabilisateur lorsque la variable « vitesse moteur » présente une valeur supérieure au seuil de vitesse moteur prédéterminé, la variable « vitesse machine » présente une valeur inférieure au seuil de vitesse machine prédéterminé, la variable « activité du dispositif de manutention de charge » est égale à la première valeur, et la variable « stabilisateur » est égale à la première valeur ou lorsque la valeur de la variable « activité de commande » est égale à la deuxième valeur, la variable « vitesse machine » présente une valeur inférieure au seuil de vitesse machine prédéterminé, la variable « activité du dispositif de manutention de charge » est égale à la première valeur, et la variable « stabilisateur » est égale à la première valeur.

Selon un mode de réalisation, l'étape de commande de la pile à combustible comporte les sous-étapes suivantes :
- comparer l'état de charge déterminé à un seuil d'état de charge,
- lorsque l'état de charge est supérieur au seuil d'état de charge, commander la pile à combustible avec une consigne prédéterminée ayant une première valeur de consigne,
- lorsque l'état de charge est inférieur au seuil d'état de charge, commander la pile à combustible avec une consigne prédéterminé ayant une deuxième valeur de consigne, la deuxième valeur de consigne étant supérieure à la première valeur de consigne.

Selon un mode de réalisation, l'étape de détermination de l'état de charge comporte les sous-étapes suivantes :
- déterminer l'état de charge à un instant t ;
- déterminer l'état de charge à un instant t+dt, dt étant un intervalle de temps prédéterminé ;
- comparer l'état de charge à l'instant t et l'état de charge à l'instant t+dt;
- lorsque l'état de charge à l'instant t+dt est inférieur à l'état de charge à l'instant t, déterminer que l'unité de stockage d'énergie est en phase de décharge ;
- lorsque l'état de charge à l'instant t+dt est supérieur à l'état de charge à l'instant t, déterminer que l'unité de stockage d'énergie est en phase de recharge ;

dans lequel l'étape de commande de la pile à combustible comportant en phase de décharge de l'unité de stockage d'énergie les sous-étapes suivantes :
   - comparer l'état de charge déterminé à un premier seuil d'état charge ;
   - lorsque l'état de charge est supérieur au premier seuil d'état de charge, commander la pile à combustible avec une consigne prédéterminée ayant une première valeur de consigne,
   - lorsque l'état de charge est inférieur au premier seuil d'état charge, commander la pile à combustible avec une consigne prédéterminée ayant une deuxième valeur de consigne, la deuxième valeur de consigne étant supérieure à la première valeur de consigne ;
et dans lequel l'étape de commande de la pile à combustible comportant en phase de recharge de l'unité de stockage d'énergie les sous-étapes suivantes :
   - comparer l'état de charge déterminé à un deuxième seuil d'état de charge, le premier seuil d'état charge étant différent du deuxième seuil d'état de charge,
   - lorsque l'état de charge est supérieur au deuxième seuil d'état de charge, commander la pile à combustible avec une consigne prédéterminée ayant la première valeur de consigne,
   - lorsque l'état de charge est inférieur au deuxième seuil d'état de charge, commander la pile à combustible avec une consigne prédéterminée ayant la deuxième valeur de consigne.

Selon un mode de réalisation, le deuxième seuil d'état de charge est supérieur au premier seuil d'état de charge.

Selon un mode de réalisation, la première et la deuxième valeur de consigne correspondent à deux des valeurs de consigne suivantes :
- une valeur de consigne « nulle » pour laquelle la pile à combustible est arrêtée,
- une valeur de consigne « ralentie » correspondant à une puissance délivrée par la pile à combustible comprise entre 2 et 25% d'une puissance maximale de la pile à combustible ;
- une valeur de consigne « moyenne » correspondant à une puissance délivrée par la pile à combustible comprise entre 25 et 85% de la puissance maximale de la pile à combustible ;
- une valeur de consigne « maximale » correspondant à une puissance délivrée par la pile à combustible supérieure à 85% de la puissance maximale de la pile à combustible.

Selon un mode de réalisation, la valeur de consigne « moyenne » est ajustée au cours de la durée de vie de la machine de travail selon les étapes suivantes :
- initialiser la valeur de consigne « moyenne » à une valeur de consigne initiale prédéterminée,
- calculer une puissance moyenne délivrée lors d'un ou plusieurs cycles d'activités de la machine de travail,
- modifier la valeur de consigne « moyenne » en fonction de la puissance moyenne calculée.

Selon un mode de réalisation, la pile à combustible est une pile à dihydrogène.

Selon un mode de réalisation, l'unité de stockage d'énergie comporte une ou plusieurs batteries, par exemple du type plomb-acide ou du type lithium-ion.

Selon un mode de réalisation, l'invention fournit aussi une unité de commande destiné à une machine de travail comportant un dispositif de manutention de charge formé d'un bras et d'un outil, au moins un moteur électrique qui est configuré pour déplacer la machine de travail et/ou actionner le dispositif de manutention de charge, une unité de stockage d'énergie configurée pour alimenter en énergie le moteur électrique, une pile à combustible qui est reliée à l'unité de stockage d'énergie et qui est configurée pour charger l'unité de stockage d'énergie, un premier organe de commande configuré pour commander le moteur électrique et un deuxième organe de commande configuré pour commander le dispositif de manutention de charge, l'unité de commande étant configurée pour :
- déterminer un mode de fonctionnement de la machine de travail parmi au moins deux modes de fonctionnement en fonction d'au moins une variable choisie parmi:
   une variable « présence conducteur » représentative de la présence d'une personne sur un siège conducteur de la machine de travail ;
   une variable « vitesse machine » représentative de la vitesse de déplacement de la machine de travail ;
   une variable « activité du mode chargement » représentative de l'activité du dispositif de manutention de charge ;
   une variable « stabilisateur » représentative de la position d'un ou plusieurs stabilisateurs ;
   une variable « recharge » représentative de l'état d'un bouton d'actionnement d'un mode recharge ;
   une variable « activité de commande » représentative de l'activité du premier organe de commande et/ou du deuxième organe de commande ;et
- déterminer un état de charge de l'unité de stockage de l'énergie ; et
- commander la pile à combustible avec une consigne prédéterminée en fonction de l'état de charge de l'unité de stockage d'énergie et du mode de fonctionnement de la machine de travail ainsi déterminés.

Selon un mode de réalisation, l'invention concerne également un produit programme d'ordinateur comprenant des instructions de code de programme pour l'exécution des étapes d'un procédé de commande selon l'un quelconque des modes de réalisation proposés ci-dessus, lorsque ledit programme est exécuté par une unité de commande.

Selon un mode de réalisation, l'invention fournit aussi une machine de travail comportant un dispositif de manutention de charge formé d'un bras et d'un outil, au moins un moteur électrique qui est configuré pour déplacer la machine de travail et/ou actionner le dispositif de manutention de charge, une unité de stockage d'énergie configurée pour alimenter en énergie le moteur électrique et une pile à combustible qui est reliée à l'unité de stockage d'énergie et qui est configurée pour charger l'unité de stockage d'énergie, et dans laquelle la machine de travail comprend une unité de commande selon l'un quelconque des modes de réalisation.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La [Fig.1] est une représentation schématique d'une machine de travail sous la forme d'un chariot télescopique selon un mode de réalisation.
[Fig.2] La [Fig.2] est une illustration schématique du système d'alimentation électrique d'une machine de travail, du type de celle représentée sur la [Fig.1].
[Fig.3] La [Fig.3] représente un logigramme de l'étape de détermination d'un mode de fonctionnement du procédé de commande de la pile à combustible selon un mode de réalisation.
[Fig.4] La [Fig.4] est un diagramme représentant la valeur de consigne de la pile à combustible en fonction d'une part en abscisse du mode de fonctionnement et d'autre part en ordonnée de l'état de charge de l'unité de stockage, pour une phase de recharge de l'unité de stockage selon un mode de réalisation.
[Fig.5] La [Fig.5] est un diagramme représentant la valeur de consigne de la pile à combustible en fonction d'une part en abscisse du mode de fonctionnement et d'autre part en ordonnée de l'état de charge de l'unité de stockage, pour une phase de décharge de l'unité de stockage selon un mode de réalisation.

### Description des modes de réalisation

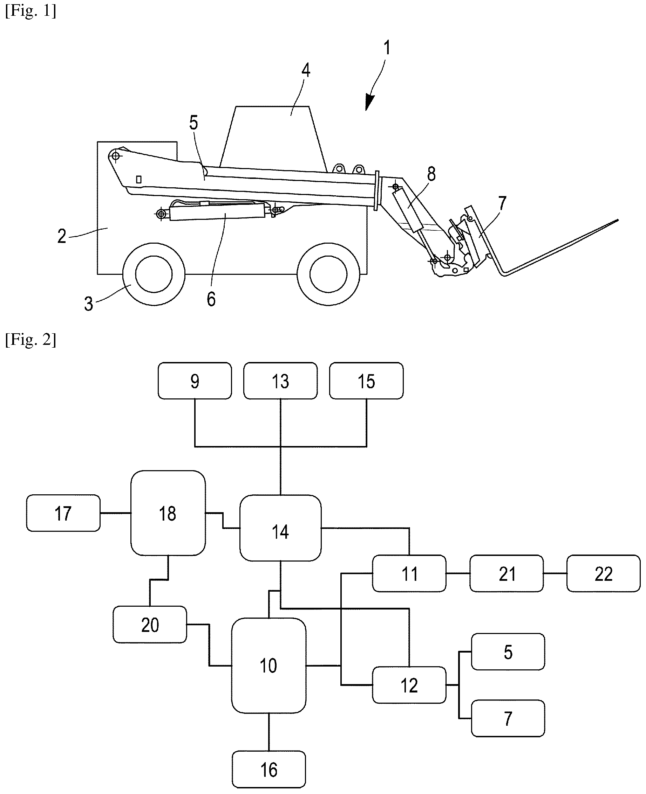

En référence à la [Fig.1], on décrit une machine de travail 1. La machine de travail 1 comporte un châssis 2, mobile. Pour ce faire, la machine de travail 1 comporte des roues 3 ou des chenilles ainsi qu'un système d'alimentation électrique, non représenté. Le système d'alimentation électrique comprend un moteur électrique 11 pour le déplacement de la machine de travail 1 ainsi qu'un dispositif de transmission qui accouple ledit moteur électrique 11 aux roues 3 ou aux chenilles, ce qui permet de déplacer la machine de travail 1. La machine de travail 1 comporte deux essieux qui sont chacun montés sur le châssis 2 et sont chacun équipés de deux roues 3.

La machine de travail 1 comporte également une cabine de conduite 4 qui est portée par le châssis 2. La cabine de conduite 4 est équipée d'un poste de conduite comprenant un siège sur lequel le conducteur peut prendre place pour la conduite du chariot élévateur. Le poste de conduite comporte également des équipements de commande de la machine de travail 1, tels qu'un volant de direction, une pédale d'accélération, une pédale de frein. Le poste de conduite est également équipé d'un ou de plusieurs organes d'actionnement qui permettent de commander le déplacement d'un dispositif de manutention de charge comportant par exemple un bras de levage 5.

La machine de travail 1 comporte également un ou plusieurs stabilisateurs 9 rétractables qui sont fixés au châssis 2. Les stabilisateurs 9 peuvent donc passer d'une position rétractée à une position de fonctionnement dans laquelle les stabilisateurs 9 sont en contact avec le sol et à distance des roues 3 et permettent d'augmenter la stabilité de la machine de travail 1. La machine de travail 1 peut comporter par exemple deux stabilisateurs 9 à l'avant de part et d'autre de la machine 1 ou encore quatre stabilisateurs 9 au niveau de chacune des roues 3.

Selon un mode de réalisation, le bras de levage 5 est télescopique, c'est-dire que sa longueur est variable. Pour ce faire, le bras de levage 5 comporte au moins deux parties dont l'une coulisse à l'intérieur de l'autre et un vérin de télescopage, non illustré, qui comporte une première et une deuxième extrémités respectivement fixées à la première et à la deuxième partie du bras de levage 5. Dans ce cas, la machine de travail 1 peut notamment être un chariot télescopique. Selon un autre mode de réalisation, le bras de levage 5 est un bras de longueur fixe.

La machine de travail 1 comporte également un vérin de levage 6 qui comporte une première extrémité qui est monté articulée sur le châssis 2 de la machine de travail 1 et une deuxième extrémité qui est montée articulée sur le bras de levage 5.

Par ailleurs, le bras de levage 5 est également équipé d'un outil 7, tel qu'un godet ou une fourche, qui est destiné à recevoir une charge. L'outil 7 est monté articulé à l'extrémité distale du bras de levage 5. L'outil 7 est monté pivotant par rapport au bras de levage 5 à l'aide d'un vérin d'inclinaison 8.

En relation avec la [Fig.2], on décrit ci-dessous les différents éléments du système d'alimentation électrique de la machine de travail 1.

La machine de travail 1 comporte une unité de stockage de l'énergie électrique 10. L'unité de stockage de l'énergie électrique 10 comporte, par exemple, une ou plusieurs batteries, par exemple du type plomb-acide ou du type lithium-ion. L'unité de stockage de l'énergie électrique 10 est raccordée électriquement à au moins un moteur électrique 11 afin de l'alimenter en énergie.

Dans le mode de réalisation représenté, l'unité de stockage de l'énergie électrique 10 alimente le moteur électrique 11 pour le déplacement de la machine de travail 1 ainsi qu'un dispositif d'entraînement 12, du dispositif de manutention comportant le bras de levage 5 et l'outil 7, le dispositif d'entraînement 12 comportant également un moteur électrique. Le moteur électrique 11 est destiné à assurer la propulsion de la machine de travail 1. Pour ce faire, le moteur électrique 11 est accouplé par un dispositif de transmission 21 à un essieu 22 de la machine de travail 1 ou aux deux essieux 22. Le dispositif de transmission 21 peut être un dispositif mécanique ou un dispositif hydraulique.

Le dispositif d'entraînement 12 du dispositif de manutention de charge peut comporter un moteur électrique et inclure des actionneurs électriques. Le dispositif d'entrainement 12 peut également être électrohydraulique et inclure une pompe entrainée par un moteur électrique, un ou plusieurs actionneurs hydrauliques, tels que le vérin 6 permettant de lever le bras de levage 5, des distributeurs hydrauliques, etc.

La machine de travail 1 comporte au moins un organe de commande 13, tel qu'une pédale d'accélération, qui est configuré pour délivrer des demandes d'actionnement du moteur électrique 11 à une unité de commande 14. La machine de travail 1 comporte de plus au moins un organe de commande 9, tel qu'un sélecteur à trois positions avant/ neutre/arrière, qui est configuré pour délivrer des demandes de passage en marche avant, marche arrière ou position neutre au moteur électrique 11. Lorsque l'organe de commande 9 n'est pas actionné, celui-ci se trouve dans une position centrale neutre et lorsqu'il est basculé par un utilisateur, l'organe de commande 9 passe dans une position avant pour délivrer une demande de passage en marche avant, et dans une position arrière pour délivrer une demande de passage en marche arrière. La machine de travail 1 comporte également au moins un organe de commande 15 du dispositif de manutention de charge, par exemple du type joystick, qui est configuré pour délivrer des demandes d'actionnement du dispositif de manutention de charge à l'unité de commande 14.

Par ailleurs, la machine de travail 1 comporte un dispositif d'évaluation de l'état de charge 16 qui est associé à l'unité de stockage de l'énergie électrique 10 et qui est configuré pour déterminer une valeur de l'état de charge de l'unité de stockage de l'énergie électrique 10 et la transmettre à l'unité de commande 14. L'état de charge est une mesure relative de la quantité d'énergie stockée correspondant au ratio entre la charge de l'unité de stockage de l'énergie électrique 10 à un certain moment et sa capacité totale, à l'origine.

Selon un mode de réalisation, le dispositif d'évaluation de l'état de charge 16 comporte un capteur de tension qui délivre une mesure de la tension, en circuit ouvert, aux bornes de l'unité de stockage de l'énergie électrique 10. La tension aux bornes de l'unité de stockage de l'énergie électrique 10 variant en fonction de son niveau de charge, une telle mesure de la tension aux bornes de l'unité de stockage de l'énergie électrique 10 permet d'estimer son état de charge.

Selon un autre mode de réalisation, le dispositif d'évaluation de l'état de charge 16 comporte un compteur de coulomb qui mesure le courant durant le chargement ou le déchargement de l'unité de stockage de l'énergie et l'intègre, ce qui permet de déterminer la quantité de charges injectées ou soutirées à l'unité de stockage de l'énergie électrique 10 et ainsi de quantifier son état de charge.

De manière connue en soi, l'unité de commande 14 est configurée pour contrôler notamment le moteur électrique 11 et le dispositif d'entraînement 12 du dispositif de manutention de charge en fonction des demandes d'actionnement du moteur électrique 11 et du dispositif de manutention de charge respectivement délivrées par les organes de commande 9 et 13 et l'organe de commande 15.

Le système d'alimentation électrique comporte un réservoir 17 destiné à stocker de l'hydrogène et une pile à combustible 18.

Le réservoir 17 est, par exemple, adapté pour stocker l'hydrogène à l'état gazeux à une pression maximale comprise entre 300 et 700 bars, par exemple de l'ordre de 350 bars. Selon un autre mode de réalisation, le réservoir 17 est adapté pour stocker l'hydrogène à l'état solide sous forme d'hydrures métalliques. Selon un autre mode de réalisation, le réservoir peut également être adapté pour stocker de l'hydrogène à l'état liquide.

Le réservoir 17 est raccordé à la pile à combustible 18 par un circuit 19 qui est notamment équipé d'un détendeur, non illustré, permettant de faire baisser la pression de l'hydrogène. La pile à combustible 18 est, en outre, équipée d'un compresseur d'alimentation en air permettant de compresser l'air comburant à l'entrée des cellules de la pile à combustible 18. La pile à combustible peut également comporter un dispositif humidificateur permettant d'humidifier l'hydrogène et l'air à l'entrée de la pile à combustible 18.

De manière connue en soi, la pile à combustible 18 est le siège d'une réaction d'oxydo-réduction qui transforme l'hydrogène provenant du réservoir 17 et l'oxygène de l'air apporté par le compresseur en électricité, en eau et en chaleur.

La machine de travail 1 comporte également un dispositif de refroidissement, non représenté, permettant de refroidir la pile à combustible 17 ainsi qu'un dispositif de collecte de l'eau, non représenté, qui permet de collecter l'eau rejetée par la pile à combustible 18.

La machine de travail 1 comporte, en outre, un équipement électronique de puissance 20 qui comporte notamment un convertisseur de tension DC/DC qui est raccordé, d'un côté, à la pile à combustible 18 et de l'autre côté au dispositif de stockage de l'énergie électrique, ici des batteries 10. Le convertisseur de tension DC/DC permet de convertir le niveau de tension délivré par la pile à combustible 18 au niveau de tension requis par les batteries 18.

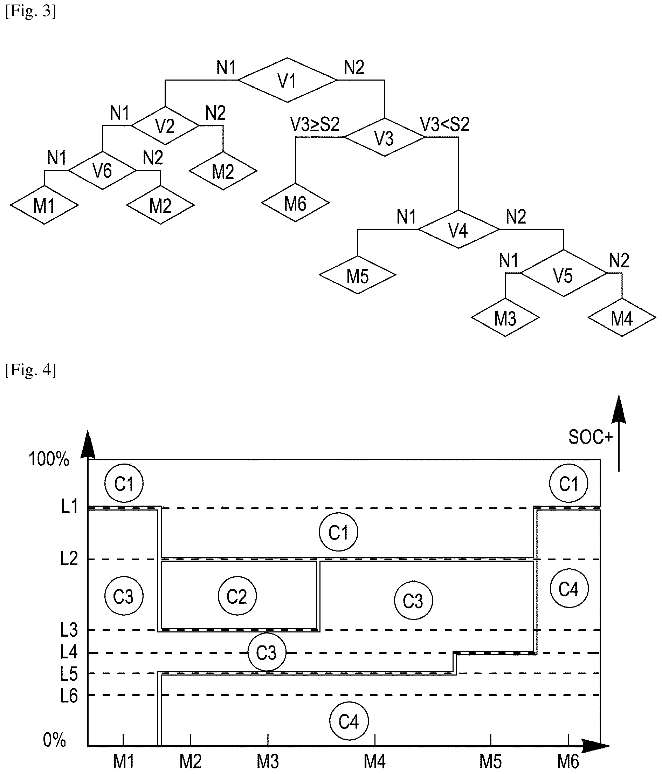

L'unité de commande 14 est également configuré pour piloter les batteries 10 en fonction de la puissance demandée par le moteur électrique 11 et le dispositif d'entrainement 12, et pour piloter la pile à combustible 18 selon un procédé de commande détaillé plus en détails ci-après en référence aux figures 3 à 5.

Dans la machine de travail 1 telle que décrite, la pile à combustible 18 permet d'augmenter l'autonomie de l'unité de stockage 10 en lui fournissant de l'énergie électrique selon la consigne appliquée à la pile à combustible 18.

Les inventeurs ont remarqué qu'il était préférable d'éviter que l'état de charge de l'unité de stockage 10 atteigne sa valeur maximale 100% pour ne pas endommager l'unité de stockage 10, et que l'état de charge de l'unité de stockage 10 atteigne sa valeur minimale pour ne pas que la machine de travail 1 s'arrête alors qu'il resterait potentiellement du combustible dans le réservoir 17.

De plus, les inventeurs ont remarqué qu'il était possible d'identifier des modes de fonctionnement bien distincts d'une machine de travail 1, au moyen de différentes variables. Dans ces modes de fonctionnement, la machine de travail 1 demande au moteur électrique 11 et au dispositif d'entrainement 12 des puissances différentes et donc sollicite en conséquence plus ou moins l'unité de stockage 10.

C'est pourquoi les inventeurs ont proposé un procédé de commande d'une pile à combustible tel que décrit ci-après.

Le procédé de commande de la pile à combustible 18 comporte ainsi les étapes suivantes :
- la détermination d'un mode de fonctionnement parmi une liste de modes de fonctionnement en fonction de différentes variables,
- la détermination d'un état de charge de l'unité de stockage 10,
- la commande de la pile à combustible avec une consigne prédéterminée en fonction de l'état de charge de l'unité de stockage d'énergie et du mode de fonctionnement de la machine de travail ainsi déterminés.

La [Fig.3] représente un logigramme de l'étape de détermination d'un mode de fonctionnement du procédé de commande de la pile à combustible selon un mode de réalisation.

Dans le mode de réalisation représenté, une liste de modes de fonctionnement a été établie :
- un mode recharge M1,
- un mode ralenti M2,
- un mode manutention sur stabilisateur M3,
- un mode manutention M4,
- un mode chargement M5,
- un mode route M6.

Afin de déterminer dans quel mode de fonctionnement se situe la machine de travail 1, la liste de variables suivante a été utilisée, comme représenté en [Fig.3] :
- une variable « vitesse moteur » représentative de la vitesse du moteur électrique du dispositif d'entraînement 12, la variable « vitesse moteur » V1 présentant une valeur qui est comparée à un seuil de vitesse moteur S1 ;
- une variable « activité de commande » V1 représentative de l'activité de l'organe de commande 9 et/ou de l'organe de commande 15, la variable « activité de commande » V1 étant apte à prendre une première valeur N1 lorsque l'organe de commande 9 et l'organe de commande 15 sont dans une position neutre et étant apte à prendre une deuxième valeur N2 lorsque l'organe de commande 9 ou l'organe de commande 15 est dans une position active,
- une variable « présence conducteur » V2 représentative de la présence d'une personne sur un siège conducteur de la machine de travail 1, la variable « présence conducteur » V2 étant apte à prendre une première valeur N1 lorsqu'une personne est présente sur un siège de la machine et une deuxième valeur N2 lorsqu'aucune personne n'est présente sur le siège,
- une variable « vitesse machine » V3 représentative de la vitesse de déplacement de la machine de travail 1, la variable « vitesse machine » V3 présentant une valeur qui est comparée à un seuil de vitesse machine S2 ;
- une variable « activité du mode chargement » V4 représentative de l'activité du dispositif de manutention de charge, la variable « activité du mode chargement » étant apte à prendre une première valeur N1 en réponse à la détection d'une consigne de débit hydraulique d'un vérin d'inclinaison de l'outil 7 compris dans une plage prédéterminée pendant une durée supérieure à un seuil de durée prédéterminé et/ou à la détection d'un angle du bras compris dans une plage prédéterminée, et à prendre une deuxième valeur N2 dans le cas contraire ;
- une variable « stabilisateur » V5 représentative de la position d'un ou plusieurs stabilisateurs, la variable « stabilisateur » V5 étant apte à prendre une première valeur N1 lorsqu'au moins un stabilisateur est dans une position de fonctionnement et étant apte à prendre une deuxième valeur N2 lorsqu'aucun stabilisateur n'est dans la position de fonctionnement;
- une variable « recharge » V6 représentative de l'état d'un bouton d'actionnement d'un mode recharge, la variable « recharge » V6 étant apte à prendre une première valeur N1 lorsque le bouton d'actionnement du mode recharge est à l'état actif et une deuxième valeur N2 lorsque le bouton d'actionnement du mode recharge est à l'état inactif.

Toutefois, dans d'autres modes de réalisation, cette liste peut comprendre plus ou moins de modes de fonctionnement selon le besoin identifié. De la même manière, d'autres variables pourraient être utilisées pour déterminer les différents modes de fonctionnement. De plus, la première valeur N1 des variables V1, V2, V4, V5 et V6 peut être la même pour chacune de ces variables (par exemple égale à 1 ou à « Oui ») ou bien être différente. De la même manière, la deuxième valeur N2 des variables V1, V2, V4, V5 et V6 peut être la même pour chacune de ces variables (par exemple égale à 0 ou à « Non ») ou bien être différente.

La détermination des différents modes de fonctionnement selon le mode réalisation représenté en [Fig.3] va être maintenant décrite.

Concernant le mode de fonctionnement recharge M1, ce mode est déterminé au moyen de la variable « présence conducteur » V2, de la variable « activité de commande » V1, et de la variable « recharge » V6.

En effet, tout d'abord l'unité de commande 14 reçoit une valeur de la variable « activité de commande » V1, une valeur de la variable « présence conducteur » V2 et une valeur de la variable « recharge » V6. Puis, , l'unité de commande 14 détermine que le mode de fonctionnement est le mode recharge M1 lorsque la valeur de la variable « présence conducteur » V2 est égale à la première valeur N1, la valeur de la variable « recharge » V6 est égale à la première valeur N1, et la valeur de la variable « activité de commande » V1 est égale à la première valeur N1.

Concernant le mode de fonctionnement ralenti M2, ce mode est déterminé de deux façons différentes.

Selon la première façon, ce mode M2 est déterminé au moyen de la variable « présence conducteur » V2 et de la variable « activité de commande » V1.

En effet, tout d'abord l'unité de commande 14 reçoit une valeur de la variable « activité de commande » V1 et une valeur de la variable « présence conducteur » V2. Puis, l'unité de commande 14 détermine que le mode de fonctionnement est le mode ralenti M2 lorsque la valeur de la variable « présence conducteur » V2 est égale à la deuxième valeur N2, et la valeur de la variable « activité de commande » V1 est égale à la première valeur N1.

Selon la deuxième façon, ce mode M2 est déterminé au moyen de la variable « recharge » V6 et de la variable « activité de commande » V1.

En effet, tout d'abord l'unité de commande 14 reçoit une valeur de la variable « recharge » V6 et une valeur de la variable « activité de commande » V1. Puis, l'unité de commande 14 détermine que le mode de fonctionnement est le mode ralenti M2 lorsque la valeur de la variable « recharge » V6 est égale à la deuxième valeur N2, et la valeur de la variable « activité de commande » V1 est égale à la première valeur N1.

Concernant le mode de fonctionnement route M6, ce mode est déterminé au moyen de la variable « activité de commande » V1, et de la variable « vitesse machine » V3.

Tout d'abord l'unité de commande 14 reçoit une valeur de la variable « activité de commande » V1 et une valeur de la variable « vitesse machine » V3. Puis, l'unité de commande 14 compare la valeur de la variable « vitesse machine » V3 au seuil de vitesse machine S2. Enfin, l'unité de commande 14 détermine que le mode de fonctionnement est le mode route M6 lorsque la valeur de la variable « activité de commande » V1 est égale à la deuxième valeur N2 et la valeur de la variable « vitesse machine » V3 est supérieure ou égale au seuil de vitesse machine S2.

Concernant le mode de fonctionnement chargement M5, ce mode est déterminé au moyen de la variable « activité de commande » V1, de la variable « vitesse machine » V3, et de la variable « activité du mode chargement » V4.

Tout d'abord l'unité de commande 14 reçoit une valeur de la variable « activité de commande » V1, une valeur de la variable « vitesse machine » V3 et une valeur de la variable « activité du mode chargement » V4. Puis, l'unité de commande 14 compare la valeur de la variable « vitesse machine » V3 au seuil de vitesse machine S2. Enfin, l'unité de commande 14 détermine que le mode de fonctionnement est le mode chargement M5 lorsque la valeur de la variable « activité de commande » V1 est égale à la deuxième valeur N2, la valeur de la variable « vitesse machine » V3 est inférieure au seuil de vitesse machine S2, et la valeur de la variable « activité du mode chargement » V4 est égale à la première valeur N1.

Concernant le mode de fonctionnement manutention M4, ce mode est déterminé au moyen de la variable « activité de commande » V1, de la variable « vitesse machine » V3, de la variable « activité du mode chargement » V4 et de la variable « stabilisateur » V5.

Tout d'abord, l'unité de commande 14 reçoit une valeur de la variable « activité de commande» V1, une valeur de la variable « vitesse machine » V3, une valeur de la variable « activité du mode chargement » V4 et une valeur de la variable « stabilisateur » V5. Puis, l'unité de commande 14 compare la valeur de la variable « vitesse machine » V3 au seuil de vitesse machine S2. Enfin, l'unité de commande 14 détermine que le mode de fonctionnement est le mode manutention M4 lorsque la valeur de la variable « activité de commande » V1 est égale à la deuxième valeur N2, la valeur de la variable « vitesse machine » V3 est inférieure au seuil de vitesse machine S2, la valeur de la variable « activité du mode chargement » V4 est égale à la deuxième valeur N2 et la valeur de la variable « stabilisateur » V5 est égale à la deuxième valeur N2.

Concernant le mode de fonctionnement manutention sur stabilisateur M5, ce mode est déterminé au moyen de la variable « activité de commande » V1, de la variable « vitesse machine » V3, de la variable « activité du mode chargement » V4 et de la variable « stabilisateur » V5.

Tout d'abord, l'unité de commande 14 reçoit une valeur de la variable « activité de commande » V1, une valeur de la variable « vitesse machine » V3, une valeur de la variable « activité du mode chargement » V4 et une valeur de la variable « stabilisateur » V5. Puis, l'unité de commande 14 compare la valeur de la variable « vitesse machine » V3 au seuil de vitesse machine S2. Enfin, l'unité de commande 14 détermine que le mode de fonctionnement est le mode manutention M4 lorsque la valeur de la variable « activité de commande » V1 est égale à la deuxième valeur N2, la valeur de la variable « vitesse machine » V3 est inférieure au seuil de vitesse machine S2, la valeur de la variable « activité du mode chargement » V4 est égale à la deuxième valeur N2, et la valeur de la variable « stabilisateur » V5 est égale à la deuxième valeur N2.

Concernant la variable « activité de commande » V1, dans un autre mode de réalisation, la variable « activité de commande » V1 peut être utilisé dans l'étape de détermination du mode de fonctionnement en combinaison avec une autre variable, à savoir une variable « vitesse moteur ». La variable « vitesse moteur » représente la vitesse du moteur électrique du dispositif d'entraînement 12 qui actionne le dispositif de manutention de charge. La variable « vitesse moteur » V1 présente ainsi une valeur qui est comparée à un seuil de vitesse moteur S1.. Ainsi, dans cet autre mode de réalisation, lorsque la variable « activité de commande » est égale à la première valeur N1 et la valeur de la variable « vitesse moteur » V1 est inférieure au seuil de vitesse moteur S1 alors l'unité de commande 14 détermine qu'il s'agit soit du mode de fonctionnement M1 soit du mode de fonctionnement M2. De plus, lorsque la variable « activité de commande » est égale à la deuxième valeur N2 ou la valeur de la variable « vitesse moteur » V1 est supérieure ou égale au seuil de vitesse moteur S1 alors l'unité de commande 14 détermine qu'il s'agit de l'un des modes de fonctionnement M3 à M6.

Concernant la variable « activité du mode chargement » V4, dans un autre mode de réalisation, la variable « activité du mode chargement » V4 peut prendre les valeurs N1 et N2 en fonction d'un autre paramètre. En effet, dans ce cas, la variable « activité du mode chargement » V4 est représentative de l'identification de l'outil 7 et est apte à prendre une première valeur N1 en réponse à la détection par un dispositif d'authentification d'outil que l'outil 7 est de type godet, et à prendre une deuxième valeur N2 en réponse à la détection par un dispositif d'authentification d'outil que l'outil 7 est de type fourche. Le dispositif d'authentification peut être un émetteur-récepteur RFID, l'outil 7 étant équipé d'une puce RFID, un capteur optique ou tout autre type de dispositif d'authentification approprié.

Lorsque le mode de fonctionnement est déterminé, l'unité de commande 14 va ensuite déterminer l'état de charge de l'unité de stockage 10 et de manière avantageuse dans quelle phase se situe l'unité de stockage 10.

Pour cela, l'unité de commande 14 reçoit l'état de charge à un instant t et l'état de charge à un instant t+dt de l'unité de stockage 10 à l'aide du dispositif d'évaluation de l'état de charge 16, dt étant un intervalle de temps prédéterminé. L'unité de commande 14 compare ainsi l'état de charge à l'instant t avec l'état de charge à l'instant t+dt. Puis, l'unité de commande 14 détermine lorsque l'état de charge à l'instant t+dt est inférieur à l'état de charge à l'instant t que l'unité de stockage 10 est en phase de décharge SOC-. Et, l'unité de commande 14 détermine lorsque l'état de charge à l'instant t+dt est supérieur à l'état de charge à l'instant t que l'unité de stockage 10 est en phase de recharge SOC+.

Dès lors que le mode de fonctionnement, l'état de charge à l'instant t et avantageusement la phase de l'unité de stockage 10 ont été déterminés, le procédé de commande passe à l'étape de commande de la pile à combustible 18.

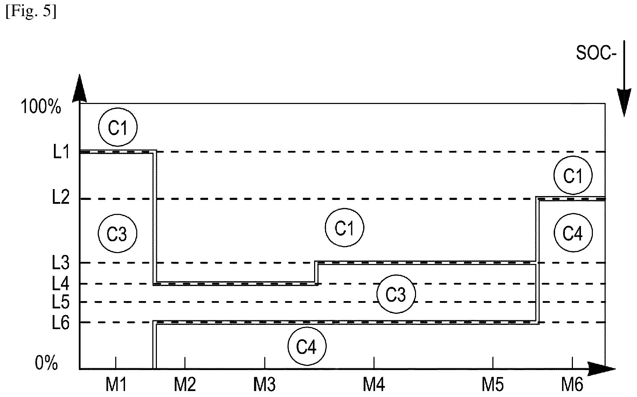

Les figures 4 et 5 illustrent pour un mode de réalisation des diagrammes représentant la valeur de consigne de la pile à combustible 18 à appliquer à la pile à combustible 18 en fonction d'une part en abscisse (axe horizontal) du mode de fonctionnement et d'autre part en ordonnée (axe vertical) de l'état de charge de l'unité de stockage 10, la [Fig.4] concernant la phase décharge et la [Fig.5] la phase de recharge de l'unité de stockage 10.

Ainsi, l'unité de commande 14, dès lors que le mode de fonctionnement de la machine de travail 1 et le mode de l'unité de stockage 10 sont connus, va comparer l'état de charge à l'instant t avec des seuils d'état de charge prédéterminés et dépendant du mode de fonctionnement de la machine de travail 1 et du mode de l'unité de stockage 10.

Dans le mode de réalisation des figures 4 et 5, six seuils d'état de charge L1 à L6 ont été représentés et sont compris entre 0 et 100% de l'état de charge maximal de l'unité de stockage 10 et présentent des valeurs décroissantes, à savoir L1>L2>L3>L4>L5>L6.

Sur ces diagrammes, les traits pleins représentent les changements de valeurs de consigne lorsque l'état de charge dépasse un seuil L1-L6 ou que le mode de fonctionnement est modifié. Les traits en pointillés illustrent la valeur de chaque seuil pour tous les modes de fonctionnement.

Comme visible sur ces figures 4 et 5, il est avantageux de prévoir, pour chaque mode de fonctionnement, une hystérésis entre la phase de recharge SOC+ et la phase de décharge SOC- de l'unité de stockage 10. En effet, l'unité de stockage 10 peut passer d'un mode charge à un mode décharge et inversement, très rapidement dès lors que la consigne de la pile à combustible 18 est modifiée. Ainsi, le passage d'un seuil d'état de charge modifiant la valeur de consigne pourrait entrainer le passage d'un mode charge à un mode décharge et inversement. C'est pourquoi, pour un même mode de fonctionnement, les seuils d'état de charge modifiant la valeur de consigne de la pile à combustible sont différents lorsque l'unité de stockage 10 est en phase de recharge SOC+ et lorsque l'unité de stockage 10 est en phase de décharge SOC-.

Dans le mode de réalisation représenté, le seuil d'état de charge d'un mode de fonctionnement donné pour passer d'une première valeur de consigne à une deuxième valeur de consigne en phase de décharge de l'unité de stockage 10 est inférieur au seuil d'état de charge dudit mode de fonctionnement pour passer de la première valeur de consigne à la deuxième valeur de consigne en phase de recharge de l'unité de stockage 10. Dans le mode de réalisation représenté, seul le mode de fonctionnement M1 ne présente pas d'hystérésis. En d'autres termes, le seuil d'état de charge est égal en phase de recharge et en phase de décharge.

Comme représenté en figures 4 et 5, le mode de réalisation prévoit l'utilisation de quatre valeurs de consigne différentes à savoir :
- une valeur de consigne « nulle » C1 pour laquelle la pile à combustible est arrêtée,
- une valeur de consigne « ralentie » C2 correspondant à une puissance délivrée par la pile à combustible comprise entre 2 et 25% d'une puissance maximale de la pile à combustible ;
- une valeur de consigne « moyenne » C3 correspondant à une puissance délivrée par la pile à combustible comprise entre 25 et 85% de la puissance maximale de la pile à combustible ;
- une valeur de consigne « maximale » C4 correspondant à une puissance délivrée par la pile à combustible supérieure à 85% de la puissance maximale de la pile à combustible.

De manière avantageuse, la valeur de consigne « moyenne » C3 est évolutive, c'est-à-dire qu'elle est modifiée pendant la durée de vie de la machine de travail 1, par une méthode d'apprentissage, c'est à dire en fonction de l'utilisation passée de la machine de travail 1. En effet, il est prévu d'initialiser la valeur de consigne « moyenne » C3 à une valeur de consigne initiale prédéterminée, qui peut, par exemple, correspondre à 50% de la puissance maximale de la pile à combustible 18, puis de calculer une puissance moyenne délivrée lors d'un ou plusieurs cycles d'activités de la machine de travail 1. La valeur de consigne « moyenne » C3 est alors modifiée en fonction de la puissance moyenne calculée. Un cycle peut être déterminé par exemple en identifiant un démarrage et un arrêt de la machine de travail 1.

L'exemple du mode de réalisation des figures 4 et 5 va être plus particulièrement décrit par la suite.

La [Fig.4] concerne plus particulièrement la phase recharge SOC+ de l'unité de stockage 10 .

Dans le mode de fonctionnement M1, il est prévu de commander la pile à combustible 18 avec :
- une valeur de consigne « nulle » C1 lorsque l'état de charge est compris entre L1 et 100%, et
- une valeur de consigne « moyenne » C3 lorsque l'état de charge est compris entre 0% et L1.

Dans le mode de fonctionnement M2, il est prévu de commander la pile à combustible 18 avec :
- une valeur de consigne « nulle » C1 lorsque l'état de charge est compris entre L2 et 100%,
- une valeur de consigne « ralentie » C2 lorsque l'état de charge est compris entre L3 et L2,
- une valeur de consigne « moyenne » C3 lorsque l'état de charge est compris entre L5 et L3, et
- une valeur de consigne « maximale » C4 lorsque l'état de charge est compris entre 0% et L5.

Dans le mode de fonctionnement M3, il est prévu de commander la pile à combustible 18 avec :
- une valeur de consigne « nulle » C1 lorsque l'état de charge est compris entre L2 et 100%,
- une valeur de consigne « ralentie » C2 lorsque l'état de charge est compris entre L3 et L2,
- une valeur de consigne « moyenne » C3 lorsque l'état de charge est compris entre L5 et L3, et
- une valeur de consigne « maximale » C4 lorsque l'état de charge est compris entre 0% et L5.

Dans le mode de fonctionnement M4, il est prévu de commander la pile à combustible 18 avec :
- une valeur de consigne « nulle » C1 lorsque l'état de charge est compris entre L2 et 100%,
- une valeur de consigne « moyenne » C3 lorsque l'état de charge est compris entre L5 et L2, et
- une valeur de consigne « maximale » C4 lorsque l'état de charge est compris entre 0% et L5.

Dans le mode de fonctionnement M5, il est prévu de commander la pile à combustible 18 avec :
- une valeur de consigne « nulle » C1 lorsque l'état de charge est compris entre L2 et 100%,
- une valeur de consigne « moyenne » C3 lorsque l'état de charge est compris entre L4 et L2, et
- une valeur de consigne « maximale » C4 lorsque l'état de charge est compris entre 0% et L4.

Dans le mode de fonctionnement M6, il est prévu de commander la pile à combustible 18 avec :
- une valeur de consigne « nulle » C1 lorsque l'état de charge est compris entre L1 et 100%, et
- une valeur de consigne « maximale » C4 lorsque l'état de charge est compris entre 0% et L1.

La [Fig.5] concerne plus particulièrement la phase décharge SOC- de l'unité de stockage 10 .

Dans le mode de fonctionnement M1, il est prévu de commander la pile à combustible 18 avec :
- une valeur de consigne « nulle » C1 lorsque l'état de charge est compris entre L1 et 100%, et
- une valeur de consigne « moyenne » C3 lorsque l'état de charge est compris entre 0% et L1.

Dans le mode de fonctionnement M2, il est prévu de commander la pile à combustible 18 avec :
- une valeur de consigne « nulle » C1 lorsque l'état de charge est compris entre L4 et 100%,
- une valeur de consigne « moyenne » C3 lorsque l'état de charge est compris entre L6 et L4, et
- une valeur de consigne « maximale » C4 lorsque l'état de charge est compris entre 0% et L6.

Dans le mode de fonctionnement M3, il est prévu de commander la pile à combustible 18 avec :
- une valeur de consigne « nulle » C1 lorsque l'état de charge est compris entre L4 et 100%,
- une valeur de consigne « moyenne » C3 lorsque l'état de charge est compris entre L6 et L4, et
- une valeur de consigne « maximale » C4 lorsque l'état de charge est compris entre 0% et L6.

Dans le mode de fonctionnement M4, il est prévu de commander la pile à combustible 18 avec :
- une valeur de consigne « nulle » C1 lorsque l'état de charge est compris entre L3 et 100%,
- une valeur de consigne « moyenne » C3 lorsque l'état de charge est compris entre L6 et L3, et
- une valeur de consigne « maximale » C4 lorsque l'état de charge est compris entre 0% et L6.

Dans le mode de fonctionnement M5, il est prévu de commander la pile à combustible 18 avec :
- une valeur de consigne « nulle » C1 lorsque l'état de charge est compris entre L3 et 100%,
- une valeur de consigne « moyenne » C3 lorsque l'état de charge est compris entre L6 et L3, et
- une valeur de consigne « maximale » C4 lorsque l'état de charge est compris entre 0% et L6.

Dans le mode de fonctionnement M6, il est prévu de commander la pile à combustible 18 avec :
- une valeur de consigne « nulle » C1 lorsque l'état de charge est compris entre L2 et 100%, et
- une valeur de consigne « maximale » C4 lorsque l'état de charge est compris entre 0% et L2.

Le mode de réalisation présenté ci-dessus n'est qu'un exemple de réalisation de l'invention. D'autres modes de réalisation pourraient être utilisés. Ces modes de réalisation pourraient ainsi comprendre un nombre différent de modes de fonctionnement, des seuils d'état de charge différents et dans un nombre différent ainsi que des consignes de la pile à combustible différentes. En effet, par exemple, des consignes intermédiaires pourraient être introduites entre les consignes C1-C4, un nombre inférieur ou supérieur à 6 pour le nombre de seuils d'état de charge, etc.

Les étapes du procédé de commande de la pile à combustible 18 sont répétés régulièrement selon une temporisation prédéterminée afin de déterminer si le mode de fonctionnement de la machine de travail 1, l'état de charge de l'unité de stockage 10 et/ou la phase de l'unité de stockage 10 ont été modifiées afin de déterminer si la consigne appliquée à la pile à combustible 18 doit être modifiée.

Les fonctions et étapes décrites ci-dessus peuvent être mise en œuvre sous forme de programme informatique ou via des composants matériels (p. ex. des réseaux de portes programmables). En particulier, les fonctions et étapes opérées par l'unité de commande peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques.

Lorsqu'il est précisé qu'une unité de commande est configuré pour réaliser une opération donnée, cela signifie que cet élément comprend des instructions informatiques et les moyens d'exécution correspondants qui permettent de réaliser ladite opération et/ou que cet élément comprend des composants électroniques correspondants.

En particulier, les étapes du procédé proposé ci-avant peuvent être implémentée dans un programme informatique non transitoire qui comprend à cet effet des instructions de code de programme pour l'exécution des étapes dudit procédé. Ledit programme peut alors être exécuté par un processeur d'une machine de travail telle que proposée ci-dessus.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

Bien que l'invention ait été décrite en liaison avec plusieurs modes de réalisation particuliers, il est bien évident qu'elle n'y est nullement limitée et comprend toutes les les combinaisons tombant sous la porté des revendications.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé de commande d'une pile à combustible (18) d'une machine de travail (1) comportant un dispositif de manutention de charge formé d'un bras et d'un outil, au moins un moteur électrique (11, 12) qui est configuré pour déplacer la machine de travail (1) et/ou actionner le dispositif de manutention de charge, une unité de stockage (10) d'énergie configurée pour alimenter en énergie l'au moins un moteur électrique (11, 12) et une pile à combustible (18) qui est reliée à l'unité de stockage (10) d'énergie et qui est configurée pour charger l'unité de stockage (10) d'énergie, un premier organe de commande (9) configuré pour commander le moteur électrique (11) et un deuxième organe de commande (15) pour commander le dispositif de manutention de charge, le procédé étant **caractérisé en ce qu'**il comporte les étapes suivantes :
- déterminer un mode de fonctionnement (M1-M6) de la machine de travail (1) parmi au moins deux modes de fonctionnement en fonction d'au moins une variable (V1-V6) choisie parmi:
une variable « présence conducteur » (V2) représentative de la présence d'une personne sur un siège conducteur de la machine de travail (1) ;
une variable « activité du mode chargement » (V4) représentative de l'activité du dispositif de manutention de charge ;
une variable « stabilisateur » (V5) représentative de la position d'un ou plusieurs stabilisateurs ;
une variable « recharge » (V6) représentative de l'état d'un bouton d'actionnement d'un mode recharge ;
une variable « activité de commande » (V1) représentative de l'activité du premier organe de commande et du deuxième organe de commande ; et
- déterminer un état de charge de l'unité de stockage (10) de l'énergie ; et
- commander la pile à combustible (18) avec une consigne prédéterminée (C1-C4) en fonction de l'état de charge de l'unité de stockage (10) d'énergie et du mode de fonctionnement (M1-M6) de la machine de travail (1) ainsi déterminés.

2. Procédé de commande d'une pile à combustible (18) selon la revendication 1, dans lequel l'un des modes de fonctionnement est un mode ralenti (M2) qui est déterminé au moyen de la variable « présence conducteur » (V2) et de la variable « activité de commande » (V1).

3. Procédé de commande d'une pile à combustible (18) selon la revendication 2, dans lequel le procédé comprend les étapes suivantes :
- recevoir la variable « présence conducteur » (V2) et la variable « activité de commande » (V1), la variable « présence conducteur » (V2) étant apte à prendre une première valeur lorsqu'une personne est présente sur un siège conducteur de la machine de travail (1) et une deuxième valeur lorsqu'aucune personne n'est présente sur le siège conducteur, la variable « activité de commande » (V1) étant apte à prendre une première valeur lorsque le premier organe de commande (9) et le deuxième organe de commande (15) n'ont pas été activés par un utilisateur et étant apte à prendre une deuxième valeur lorsque le premier organe de commande (9) ou le deuxième organe de commande (15) a été activé par un utilisateur ;
- déterminer que le mode de fonctionnement est le mode ralenti (M2) lorsque la variable « activité de commande » est égale à la première valeur et que la variable « présence conducteur » (V2) est égale à la deuxième valeur.

4. Procédé de commande d'une pile à combustible (18) selon l'une des revendications 1 à 3, dans lequel l'un des modes de fonctionnement est un mode recharge (M1) qui est déterminé au moyen de la variable « présence conducteur » (V2), de la variable « activité de commande » (V1), et de la variable « recharge » (V6).

5. Procédé de commande d'une pile à combustible (18) selon la revendication 4, dans lequel le procédé comprend les étapes suivantes :
- recevoir la variable « présence conducteur » (V2), la variable « activité de commande » (V1), et la variable « recharge » (V6), la variable « présence conducteur » (V2) étant apte à prendre une première valeur lorsqu'une personne est présente sur un siège de la machine et une deuxième valeur lorsqu'aucune personne n'est présente sur le siège », la variable « recharge » (V6) étant apte à prendre une première valeur lorsque le bouton d'actionnement du mode recharge est à l'état actif et une deuxième valeur lorsque le bouton d'actionnement du mode recharge est à l'état inactif, la variable « activité de commande » (V1) étant apte à prendre une première valeur lorsque le premier organe de commande (9) et le deuxième organe de commande (15) sont dans une position neutre et étant apte à prendre une deuxième valeur lorsque le premier organe de commande (9) ou le deuxième organe de commande (15) est dans une position active ;
- déterminer que le mode de fonctionnement est le mode recharge (M1) lorsque la variable « activité de commande » (V1) est égale à la première valeur, la variable « présence conducteur » (V2) est égale à la première valeur et la valeur « recharge » est égale à la première valeur.

6. Procédé de commande d'une pile à combustible (18) selon l'une des revendications 1 à 5, dans lequel l'un des modes de fonctionnement est un mode chargement (M5) qui est déterminé au moyen d'une variable « vitesse machine » (V3) représentative de la vitesse de déplacement de la machine de travail (1), de la variable « activité de commande » (V1) et de la variable « activité du mode chargement » (V4).

7. Procédé de commande d'une pile à combustible (18) selon la revendication 6, dans lequel le procédé comprend les étapes suivantes :
- recevoir la variable « vitesse machine » (V3), la variable « activité de commande », et la variable « activité du mode chargement » (V4), la variable « activité du mode chargement » (V4) étant apte à prendre une première valeur en réponse à la détection d'une consigne de débit hydraulique d'un vérin d'inclinaison de l'outil compris dans une plage prédéterminée pendant une durée supérieure à un seuil de durée prédéterminé et à la détection d'un angle du bras compris dans une plage prédéterminée et à prendre une deuxième valeur dans le cas contraire, la variable « activité de commande » (V1) étant apte à prendre une première valeur lorsque le premier organe de commande (9) et le deuxième organe de commande (15) sont dans une position neutre et étant apte à prendre une deuxième valeur lorsque le premier organe de commande (9) ou le deuxième organe de commande (15) est dans une position active ;
- comparer la variable « vitesse machine » (V3) à un seuil de vitesse machine (S2) prédéterminé,
- déterminer que le mode de fonctionnement est le mode chargement lorsque la variable « activité de commande » (V1) est égale à la deuxième valeur, la variable « vitesse machine » (V3) présente une valeur inférieure au seuil de vitesse machine (S2) prédéterminé, et la variable « activité du mode chargement » (V4) est égale à la première valeur.

8. Procédé de commande d'une pile à combustible (18) selon l'une des revendications 1 à 7, dans lequel l'un des modes de fonctionnement est un mode manutention (M4) déterminé au moyen d'une variable « vitesse machine » (V3) représentative de la vitesse de déplacement de la machine de travail (1), de la variable « activité de commande » (V1), de la variable « activité du mode chargement » (V4) et de la variable « stabilisateur » (V5).

9. Procédé de commande d'une pile à combustible (18) selon la revendication 8, dans lequel le procédé comprend les étapes suivantes :
- recevoir la variable « vitesse machine » (V3), la variable « activité de commande » (V1), la variable « activité du mode chargement » (V4), et la variable « stabilisateur » (V5) ; la variable « activité du mode chargement » (V4) étant apte à prendre une première valeur en réponse à la détection d'une consigne de débit hydraulique d'un vérin d'inclinaison de l'outil (7) compris dans une plage prédéterminée pendant une durée supérieure à un seuil de durée prédéterminé et à la détection d'un angle du bras (5) compris dans une plage prédéterminée et à prendre une deuxième valeur dans le cas contraire ; la variable « stabilisateur » (V5) étant apte à prendre une première valeur lorsqu'au moins un stabilisateur (9) est dans une position de fonctionnement et étant apte à prendre une deuxième valeur lorsqu'aucun stabilisateur (9) n'est dans la position de fonctionnement, la variable « activité de commande » (V1) étant apte à prendre une première valeur lorsque le premier organe de commande (9) et le deuxième organe de commande (15) sont dans une position neutre et étant apte à prendre une deuxième valeur lorsque le premier organe de commande (9) ou le deuxième organe de commande (15) est dans une position active ;
- comparer la variable « vitesse machine » (V3) à un seuil de vitesse machine (S2) prédéterminé,
- déterminer que le mode de fonctionnement est le mode manutention (M4) lorsque la variable « activité de commande » (V1) est égale à la deuxième valeur, la variable « vitesse machine » (V3) présente une valeur inférieure au seuil de vitesse machine (S2) prédéterminé, la variable « activité du dispositif de manutention de charge » est égale à la première valeur, et la variable « stabilisateur » (V5)est égale à la deuxième valeur.

10. Procédé de commande d'une pile à combustible (18) selon l'une des revendications 1 à 9, dans lequel l'étape de commande de la pile à combustible (18) comporte les sous-étapes suivantes :
- comparer l'état de charge déterminé à un seuil d'état de charge (L1-L6),
- lorsque l'état de charge est supérieur au seuil d'état de charge (L1-L6), commander la pile à combustible (18) avec une consigne prédéterminée (C1-C4) ayant une première valeur de consigne,
- lorsque l'état de charge est inférieur au seuil d'état de charge (L1-L6), commander la pile à combustible (18) avec une consigne prédéterminé (C1-C4) ayant une deuxième valeur de consigne, la deuxième valeur de consigne étant supérieure à la première valeur de consigne.

11. Procédé de commande d'une pile à combustible (18) selon l'une des revendications 1 à 9, dans lequel l'étape de détermination de l'état de charge comporte les sous-étapes suivantes :
- déterminer l'état de charge à un instant t ;
- déterminer l'état de charge à un instant t+dt, dt étant un intervalle de temps prédéterminé ;
- comparer l'état de charge à l'instant t et l'état de charge à l'instant t+dt ;
- lorsque l'état de charge à l'instant t+dt est inférieur à l'état de charge à l'instant t, déterminer que l'unité de stockage (10) d'énergie est en phase de décharge (SOC-) ;
- lorsque l'état de charge à l'instant t+dt est supérieur à l'état de charge à l'instant t, déterminer que l'unité de stockage (10) d'énergie est en phase de recharge (SOC+) ;
dans lequel l'étape de commande de la pile à combustible (18) comportant en phase de décharge (SOC-) de l'unité de stockage (10) d'énergie les sous-étapes suivantes :
- comparer l'état de charge déterminé à un premier seuil d'état charge (L1-L6) ;
- lorsque l'état de charge est supérieur au premier seuil d'état de charge, commander la pile à combustible (18) avec une consigne prédéterminée (C1-C4) ayant une première valeur de consigne,
- lorsque l'état de charge est inférieur au premier seuil d'état charge, commander la pile à combustible (18) avec une consigne prédéterminée ayant une deuxième valeur de consigne, la deuxième valeur de consigne étant supérieure à la première valeur de consigne ;
et dans lequel l'étape de commande de la pile à combustible (18) comportant en phase de recharge (SOC+) de l'unité de stockage (10) d'énergie les sous-étapes suivantes :
- comparer l'état de charge déterminé à un deuxième seuil d'état de charge (L1-L6), le premier seuil d'état charge étant différent du deuxième seuil d'état de charge,
- lorsque l'état de charge est supérieur au deuxième seuil d'état de charge, commander la pile à combustible (18) avec une consigne prédéterminée (C1-C4) ayant la première valeur de consigne,
- lorsque l'état de charge est inférieur au deuxième seuil d'état de charge, commander la pile à combustible (18) avec une consigne prédéterminée (C1-C4) ayant la deuxième valeur de consigne.

12. Procédé de commande d'une pile à combustible (18) selon la revendication 10 ou la revendication 11, dans lequel la première et la deuxième valeur de consigne correspondent à deux des valeurs de consigne suivantes :
- une valeur de consigne « nulle » (C1) pour laquelle la pile à combustible (18) est arrêtée,
- une valeur de consigne « ralentie » (C2) correspondant à une puissance délivrée par la pile à combustible (18) comprise entre 2 et 25% d'une puissance maximale de la pile à combustible (18) ;
- une valeur de consigne « moyenne » (C3) correspondant à une puissance délivrée par la pile à combustible (18) comprise entre 25 et 85% de la puissance maximale de la pile à combustible (18) ;
- une valeur de consigne « maximale » (C4) correspondant à une puissance délivrée par la pile à combustible (18) supérieure à 85% de la puissance maximale de la pile à combustible (18).

13. Procédé de commande d'une pile à combustible (18) selon la revendication 12, dans lequel la valeur de consigne « moyenne » (C3) est ajustée au cours de la durée de vie de la machine de travail (1) selon les étapes suivantes :
- initialiser la valeur de consigne « moyenne » (C3) à une valeur de consigne initiale prédéterminée,
- calculer une puissance moyenne délivrée lors d'un ou plusieurs cycles d'activités de la machine de travail (1),
- modifier la valeur de consigne « moyenne » (C3) en fonction de la puissance moyenne calculée.

14. Unité de commande (14) destiné à une machine de travail (1) comportant un dispositif de manutention de charge formé d'un bras (5) et d'un outil (7), au moins un moteur électrique (11) qui est configuré pour déplacer la machine de travail (1) et/ou actionner le dispositif de manutention de charge, une unité de stockage (10) d'énergie configurée pour alimenter en énergie le moteur électrique (11), une pile à combustible (18) qui est reliée à l'unité de stockage (10) d'énergie et qui est configurée pour charger l'unité de stockage (10) d'énergie, un premier organe de commande (9) configuré pour commander le moteur électrique (11) et un deuxième organe de commande (15) configuré pour commander le dispositif de manutention de charge, l'unité de commande (14) est **caractérisée en ce qu'**elle est configurée pour :
- déterminer un mode de fonctionnement (M1-M6) de la machine de travail (1) parmi au moins deux modes de fonctionnement en fonction d'au moins une variable choisie parmi:
une variable « présence conducteur » (V2) représentative de la présence d'une personne sur un siège conducteur de la machine de travail (1) ;
une variable « activité du mode chargement » (V4) représentative de l'activité du dispositif de manutention de charge ;
une variable « stabilisateur » (V5) représentative de la position d'un ou plusieurs stabilisateurs ;
une variable « recharge » (V6) représentative de l'état d'un bouton d'actionnement d'un mode recharge ;
une variable « activité de commande » (V1) représentative de l'activité du premier organe de commande (9) et du deuxième organe de commande (15) ; et
- déterminer un état de charge de l'unité de stockage (10) de l'énergie ; et
- commander la pile à combustible (18) avec une consigne prédéterminée (C1-C4) en fonction de l'état de charge de l'unité de stockage (10) d'énergie et du mode de fonctionnement (M1-M6) de la machine de travail ainsi déterminés.

15. Produit programme d'ordinateur comprenant des instructions de code de programme pour l'exécution des étapes d'un procédé de commande selon l'une des revendications 1 à 13, lorsque ledit programme est exécuté par une unité de commande (14).

16. Machine de travail (1) comportant un dispositif de manutention de charge formé d'un bras (5) et d'un outil (7), au moins un moteur électrique (11) qui est configuré pour déplacer la machine de travail (1) et/ou actionner le dispositif de manutention de charge, une unité de stockage (10) d'énergie configurée pour alimenter en énergie le moteur électrique (11), une pile à combustible (18) qui est reliée à l'unité de stockage (10) d'énergie et qui est configurée pour charger l'unité de stockage (10) d'énergie, un premier organe de commande (9) configuré pour commander le moteur électrique (11) et un deuxième organe de commande (15) configuré pour commander le dispositif de manutention de charge, et dans laquelle la machine de travail (1) est **caractérisée en ce qu'**elle comprend une unité de commande (14) selon la revendication 14.

## Patentansprüche

1. Verfahren zur Steuerung einer Brennstoffzelle (18) einer Arbeitsmaschine (1) umfassend eine Lasthandhabungsvorrichtung bestehend aus einem Arm und einem Werkzeug, mindestens einen Elektromotor (11, 12), der für die Bewegung der Arbeitsmaschine (1) und/oder für die Betätigung der Lasthandhabungsvorrichtung eingerichtet ist, eine Energiespeichereinheit (10), die für die Energieversorgung des mindestens einen Elektromotors (11, 12) eingerichtet ist, und eine mit der Energiespeichereinheit (10) verbundene Brennstoffzelle (18), die zum Laden der Energiespeichereinheit (10) eingerichtet ist, ein erstes Steuergerät (9), das für die Steuerung des Elektromotors (11) eingerichtet ist, und eine zweites Steuergerät (15), das für die Steuerung der Lasthandhabungsvorrichtung eingerichtet ist, wobei das Verfahren **dadurch gekennzeichnet ist, dass** dieses die folgenden Schritte umfasst:
- Bestimmen eines Betriebsmodus (M1-M6) der Arbeitsmaschine (1) von mindestens zwei Betriebsmoden in Abhängigkeit von mindestens einer Variablen (V1-V6), die ausgewählt wird aus:
einer Variablen "Fahreranwesenheit" (V2), die repräsentativ ist für die Anwesenheit einer Person auf einem Fahrersitz der Arbeitsmaschine (1);
einer Variablen "Lademodusaktivität" (V4), die repräsentativ ist für die Aktivität der Lasthandhabungsvorrichtung;
einer Variablen "Stabilisator" (V5), die repräsentativ ist für die Position eines oder mehrerer Stabilisatoren;
einer Variablen "Aufladen" (V6), die repräsentativ ist für den Zustand eines Bedienknopfes für einen Auflademodus;
einer Variablen "Steuerungsaktivität" (V1), die repräsentativ ist für die Aktivität des ersten Steuergeräts und des zweiten Steuergeräts;
und
- Bestimmen eines Ladezustands der Energiespeichereinheit (10); und
- Steuern einer Brennstoffzelle (18) mit einem vorgegebenen Sollwert (C1-C4) in Abhängigkeit von dem so ermittelten Ladezustand der Energiespeichereinheit (10) und Betriebsmodus (M1-M6) der Arbeitsmaschine (1).

2. Verfahren zur Steuerung einer Brennstoffzelle (18) nach Anspruch 1, wobei einer der Betriebsmoden ein Leerlaufmodus (M2) ist, der mit Hilfe der Variablen "Fahreranwesenheit" (V2) und der Variablen "Steuerungsaktivität" (V1) bestimmt wird.

3. Verfahren zur Steuerung einer Brennstoffzelle (18) nach Anspruch 2, wobei das Verfahren die folgenden Schritte umfasst:
- Empfangen der Variablen "Fahreranwesenheit" (V2) und der Variablen "Steuerungsaktivität" (V1), wobei die Variable "Fahreranwesenheit" (V2) einen ersten Wert annehmen kann, wenn auf dem Fahrersitz der Arbeitsmaschine (1) eine Person anwesend ist, und einen zweiten Wert, wenn auf dem Fahrersitz keine Person anwesend ist, wobei die Variable "Steuerungsaktivität" (V1) einen ersten Wert annehmen kann, wenn das erste Steuergerät (9) und das zweite Steuergerät (15) von einem Benutzer nicht aktiviert wurden, und einen zweiten Wert, wenn das erste Steuergerät (9) oder das zweite Steuergerät (15) von einem Benutzer aktiviert wurden;
- Bestimmen, dass der Betriebsmodus der Leerlaufmodus (M2) ist, wenn die Variable "Fahreranwesenheit" (V2) gleich dem zweiten Wert ist.

4. Verfahren zur Steuerung einer Brennstoffzelle (18) nach einem der Ansprüche 1 bis 3, wobei einer der Betriebsmoden ein Auflademodus (M1) ist, der mit Hilfe der Variablen "Fahreranwesenheit" (V2), der Variablen "Steuerungsaktivität" (V1) und der Variablen "Aufladen" (V6) bestimmt wird.

5. Verfahren zur Steuerung einer Brennstoffzelle (18) nach Anspruch 4, wobei das Verfahren die folgenden Schritte umfasst:
- Empfangen der Variablen "Fahreranwesenheit" (V2), der Variablen "Steuerungsaktivität" (V1) und der Variablen "Aufladen" (V6), wobei die Variable "Fahreranwesenheit" (V2) einen ersten Wert annehmen kann, wenn auf dem Sitz der Arbeitsmaschine eine Person anwesend ist, und einen zweiten Wert, wenn auf dem Sitz der Arbeitsmaschine keine Person anwesend ist, wobei die Variable "Aufladen" (V6) einen ersten Wert annehmen kann, wenn der Bedienknopf für den Auflademodus im aktivierten Zustand ist, und einen zweiten Wert, wenn der Bedienknopf für den Auflademodus im nicht aktivierten Zustand ist, wobei die Variable "Steuerungsaktivität" (V1) einen ersten Wert annehmen kann, wenn sich das erste Steuergerät (9) und das zweite Steuergerät (15) in einer Neutralposition befinden, und einen zweiten Wert, wenn sich das erste Steuergerät (9) oder das zweite Steuergerät (15) in einer aktiven Position befinden;
- Bestimmen, dass der Betriebsmodus der Auflademodus (M1) ist, wenn die Variable "Steuerungsaktivität" (V1) gleich dem ersten Wert, die Variable "Fahreranwesenheit" (V2) gleich dem ersten Wert und der Wert "Aufladen" gleich dem ersten Wert entspricht.

6. Verfahren zur Steuerung einer Brennstoffzelle (18) nach einem der Ansprüche 1 bis 5, wobei einer der Betriebsmoden ein Lademodus (M5) ist, der bestimmt wird mit Hilfe einer Variablen "Geschwindigkeit Maschine" (V3), die repräsentativ ist für die Bewegungsgeschwindigkeit der Arbeitsmaschine (1), der Variablen "Steuerungsaktivität" (V1) und der Variablen "Lademodusaktivität" (V4).

7. Verfahren zur Steuerung einer Brennstoffzelle (18) nach Anspruch 6, wobei das Verfahren die folgenden Schritte umfasst:
- Empfangen der Variablen "Geschwindigkeit Maschine" (V3), der Variablen "Steuerungsaktivität" und der Variablen "Lademodusaktivität" (V4), wobei die Variable "Lademodusaktivität" (V4) in Reaktion auf die Erfassung eines Sollwerts einer hydraulischen Durchflussmenge eines Kippzylinders des Werkzeugs innerhalb eines vorgegebenen Bereichs für eine Dauer, die länger als ein vorgegebener Schwellenwert ist, und auf die Erfassung eines Winkels des Arms innerhalb eines vorgegebenen Bereichs einen ersten Wert und im gegenteiligen Fall einen zweiten Wert annehmen kann, wobei die Variable "Steuerungsaktivität" (V1) einen ersten Wert annehmen kann, wenn sich das erste Steuergerät (9) und das zweite Steuergerät (15) in einer Neutralposition befinden, und einen zweiten Wert, wenn sich das erste Steuergerät (9) oder das zweite Steuergerät (15) in einer aktiven Position befinden;
- Vergleichen der Variablen "Geschwindigkeit Maschine" (V3) mit einem vorgegebenen Schwellenwert der Geschwindigkeit der Maschine (S2),
- Bestimmen, dass der Betriebsmodus der Lademodus ist, wenn die Variable "Steuerungsaktivität" (V1) gleich einem zweiten Wert entspricht, die Variable "Geschwindigkeit Maschine" (V3) einen Wert kleiner als der Schwellenwert der Geschwindigkeit der Maschine (V2) aufweist und die Variable "Lademodusaktivität" (V4) gleich dem ersten Wert entspricht.

8. Verfahren zur Steuerung einer Brennstoffzelle (18) nach einem der Ansprüche 1 bis 7, wobei einer der Betriebsmoden ein Handhabungsmodus (M4) ist, der bestimmt wird mit Hilfe einer Variablen "Geschwindigkeit Maschine" (V3), die repräsentativ ist für die Bewegungsgeschwindigkeit der Arbeitsmaschine (1), der Variablen "Steuerungsaktivität" (V1), der Variablen "Lademodusaktivität" (V4) und der Variablen "Stabilisator" (V5).

9. Verfahren zur Steuerung einer Brennstoffzelle (18) nach Anspruch 8, wobei das Verfahren die folgenden Schritte umfasst:
- Empfangen der Variablen "Geschwindigkeit Maschine" (V3), der Variablen "Steuerungsaktivität" (V1), der Variablen "Lademodusaktivität" (V4) und der Variablen "Stabilisator" (V5); wobei die Variable "Lademodusaktivität" (V4) in Reaktion auf die Erfassung eines Sollwerts einer hydraulischen Durchflussmenge eines Kippzylinders des Werkzeugs (7) innerhalb eines vorgegebenen Bereichs für eine Dauer, die länger als ein vorgegebener Schwellenwert ist, und auf die Erfassung eines Winkels des Arms (5) innerhalb eines vorgegebenen Bereichs einen ersten Wert und im gegenteiligen Fall einen zweiten Wert annehmen kann; wobei die Variable "Stabilisator" (V5) einen ersten Wert annehmen kann, wenn sich mindestens ein Stabilisator (9) in einer Betriebsposition befindet, und einen zweiten Wert, wenn sich kein Stabilisator (9) in der Betriebsposition befindet, wobei die Variable "Steuerungsaktivität" (V1) einen ersten Wert annehmen kann, wenn sich das erste Steuergerät (9) und das zweite Steuergerät (15) in einer Neutralposition befinden, und einen zweiten Wert, wenn sich das erste Steuergerät (9) oder das zweite Steuergerät (15) in einer aktiven Position befinden;
- Vergleichen der Variablen "Geschwindigkeit Maschine" (V3) mit einer vorgegebenen Geschwindigkeitsschwelle der Maschine (S2),
- Bestimmen, dass der Betriebsmodus der Handhabungsmodus (M4) ist, wenn die Variable "Steuerungsaktivität" (V1) gleich dem zweiten Wert entspricht, die Variable "Geschwindigkeit Maschine" (V3) einen Wert aufweist, der kleiner ist als der vorgegebene Schwellenwert der Geschwindigkeit der Maschine (S2), die Variable "Aktivität der Lasthandhabungsvorrichtung" gleich dem ersten Wert entspricht und die Variable "Stabilisator" (V5) gleich dem zweiten Wert entspricht.

10. Verfahren zur Steuerung einer Brennstoffzelle (18) nach einem der Ansprüche 1 bis 9, wobei der Schritt der Steuerung der Brennstoffzelle (18) die folgenden Teilschritte umfasst:
- Vergleichen des ermittelten Ladezustands mit einer Ladezustandsschwelle (L1-L6),
- wenn der Ladezustand über der Ladezustandsschwelle (L1-L6) liegt, Steuern der Brennstoffzelle (18) mit einem vorgegebenen Sollwert (C1-C4), der einen ersten Sollwert aufweist,
- wenn der Ladezustand unter der Ladezustandsschwelle (L1-L6) liegt, Steuern der Brennstoffzelle (18) mit einem vorgegebenen Sollwert (C1-C4), der einen zweiten Sollwert aufweist, wobei der zweite Sollwert höher ist als der erste Sollwert.

11. Verfahren zur Steuerung einer Brennstoffzelle (18) nach einem der Ansprüche 1 bis 9, wobei der Schritt des Bestimmens des Ladezustands die folgenden Teilschritte umfasst:
- Bestimmen des Ladezustands an einem Zeitpunkt t;
- Bestimmen des Ladezustands an einem Zeitpunkt t+dt, wobei dt ein vorgegebenes Zeitintervall ist;
- Vergleichen des Ladezustands an dem Zeitpunkt t und des Ladezustands an dem Zeitpunkt t+td;
- wenn der Ladezustand an dem Zeitpunkt t+dt niedriger ist als an dem Zeitpunkt t, Bestimmen, dass die Energiespeichereinheit (10) sich in der Entladephase (SOC-) befindet;
- wenn der Ladezustand an dem Zeitpunkt t+dt höher ist als der Ladezustand an dem Zeitpunkt t, Bestimmen, dass sich die Energiespeichereinheit (10) in der Aufladephase (SOC+) befindet;
wobei der Schritt der Steuerung der Brennstoffzelle (18) in der Entladephase (SOC-) der Energiespeichereinheit (10) die folgenden Teilschritte umfasst:
- Vergleichen des ermittelten Ladezustands mit einer ersten Ladezustandsschwelle (L1-L6);
- wenn der Ladezustand höher ist als die erste Ladezustandsschwelle, Steuern der Brennstoffzelle (18) mit einem vorgegebenen Sollwert (C1-C4), der einen ersten Sollwert aufweist,
- wenn der Ladezustand niedriger ist als die erste Ladezustandsschwelle, Steuern der Brennstoffzelle (18) mit einem vorgegebenen Sollwert, der einen zweiten Sollwert aufweist, wobei der zweite Sollwert höher ist als der erste Sollwert;
und wobei der Schritt der Steuerung der Brennstoffzelle (18) in der Aufladephase (SOC+) der Energiespeichereinheit die folgenden Teilschritte umfasst:
- Vergleichen des ermittelten Ladezustands mit einer zweiten Ladezustandsschwelle (L1-L6), wobei sich die erste Ladezustandsschwelle von der zweiten Ladezustandsschwelle unterscheidet,
- wenn der Ladezustand höher ist als die zweite Ladezustandsschwelle, Steuerung der Brennstoffzelle (18) mit einem vorgegebenen Sollwert (C1-C4), der den ersten Sollwert aufweist,
- wenn der Ladezustand niedriger ist als die zweite Ladezustandsschwelle, Steuerung der Brennstoffzelle (18) mit einem vorgegebenen Schwellenwert (C1-C4), der den zweiten Schwellenwert aufweist.

12. Verfahren zur Steuerung einer Brennstoffzelle (18) nach Anspruch 10 oder Anspruch 11, wobei der erste und der zweite Sollwert zwei der folgenden Sollwerte entsprechen:
- einem Sollwert "null" (C1), bei dem die Brennstoffzelle (18) abgeschaltet ist,
- einem Sollwert "Leerlauf" (C2), der einer von der Brennstoffzelle (18) abgegebenen Leistung zwischen 2 und 25% einer Maximalleistung der Brennstoffzelle (18) entspricht;
- einem Sollwert "durchschnittlich" (C3), der einer von der Brennstoffzelle (18) abgegebenen Leistung zwischen 25 und 85% der Maximalleistung der Brennstoffzelle (18) entspricht;
- einem Sollwert "maximal" (C4), der einer von der Brennstoffzelle (18) abgegebenen Leistung von mehr als 85% der Maximalleistung der Brennstoffzelle (18) entspricht.

13. Verfahren zur Steuerung einer Brennstoffzelle (18) nach Anspruch 12, wobei der Sollwert "durchschnittlich" (C3) im Laufe der Lebensdauer der Arbeitsmaschine (1) gemäß den folgenden Schritten angepasst wird:
- Initialisieren des Sollwerts "durchschnittlich" (C3) auf einen vorgegebenen Anfangssollwert,
- Berechnen einer durchschnittlichen abgegebenen Leistung während eines oder mehrerer Aktivitätszyklen der Arbeitsmaschine (1),
- Modifizieren des Sollwerts "durchschnittlich" (C3) in Abhängigkeit von der berechneten durchschnittlichen Leistung.

14. Steuereinheit (14) für eine Arbeitsmaschine (1), umfassend eine Lasthandhabungsvorrichtung, die aus einem Arm (5) und einem Werkzeug (7) besteht, mindestens einen Elektromotor (11), der für die Bewegung der Arbeitsmaschine (1) und/oder die Betätigung des Lasthandhabungsvorrichtung eingerichtet ist, eine Energiespeichereinheit (10) die für die Energieversorgung des Elektromotors (11) eingerichtet ist, eine Brennstoffzelle (18), die mit der Energiespeichereinheit (10) verbunden ist und eingerichtet ist zum Laden der Energiespeichereinheit (10), ein erstes Steuergerät (9) das zum Steuern des Elektromotors (11) eingerichtet ist, und ein zweites Steuergerät (15), das zum Steuern der Lasthandhabungsvorrichtung eingerichtet ist, wobei die Steuereinheit (14) **dadurch gekennzeichnet ist, dass** diese eingerichtet ist zum:
- Bestimmen eines Betriebsmodus (M1-M6) der Arbeitsmaschine (1) von mindestens zwei Betriebsmoden in Abhängigkeit von mindestens einer Variablen, die ausgewählt wird aus:
einer Variablen "Fahreranwesenheit" (V2), die repräsentativ ist für die Anwesenheit einer Person auf einem Fahrersitz der Arbeitsmaschine (1);
einer Variablen "Lademodusaktivität" (V4), die repräsentativ ist für die Aktivität der Lasthandhabungsvorrichtung;
einer Variablen "Stabilisator" (V5), die repräsentativ ist für die Position eines oder mehrerer Stabilisatoren;
einer Variablen "Aufladen" (V6), die repräsentativ ist für den Zustand eines Bedienknopfes für den Auflademodus;
einer Variablen "Steuerungsaktivität" (V1), die repräsentativ ist für die Aktivität des ersten Steuergeräts (9) und des zweiten Steuergeräts (15); und
- Bestimmen eines Ladezustands der Energiespeichereinheit (10); und
- Steuern der Brennstoffzelle (18) mit einem vorgegebenen Sollwert (C1-C4) in Abhängigkeit von dem so bestimmten Ladezustand der Energiespeichereinheit (10) und Betriebsmodus (M1-M6) der Arbeitsmaschine.

15. Computerprogrammprodukt enthaltend Programmcodeanweisungen zum Durchführen der Schritte eines Steuerungsverfahrens gemäß einem der Ansprüche 1 bis 13 umfasst, wenn das Programm von einer Steuereinheit (14) ausgeführt wird.

16. Arbeitsmaschine (1), umfassend eine Lasthandhabungsvorrichtung bestehend aus einem Arm (5) und einem Werkzeug (7), mindestens einen Elektromotor (11), der eingerichtet ist zum Bewegen der Arbeitsmaschine (1) und/oder zum Betätigen der Lasthandhabungsvorrichtung, eine Energiespeichereinheit (10), die eingerichtet ist zur Energieversorgung des Elektromotors (11), eine Brennstoffzelle (18), die mit der Energiespeichereinheit (10) verbunden ist, ein erstes Steuergerät (9), das für die Steuerung des Elektromotors (11) eingerichtet ist, und ein zweites Steuergerät (15), das für die Steuerung der Lasthandhabungsvorrichtung eingerichtet ist, wobei die Arbeitsmaschine (1) **dadurch gekennzeichnet ist, dass** diese eine Steuereinheit (14) gemäß Anspruch 14 umfasst.

## Claims

1. A method of controlling a fuel cell (18) of a working machine (1) including a load-handling device formed of an arm and a tool, at least one electric motor (11, 12) that is configured to move the working machine (1) and/or to actuate the load-handling device, an energy storage unit (10) configured to supply energy to the at least one electric motor (11, 12) and a fuel cell (18) that is connected to the energy storage unit (10) and is configured to charge the energy storage unit (10), a first control member (9) configured to control the electric motor (11) and a second control member (15) configured to control the load-handling device, the method being **characterized in that** it includes the following steps:
- determining an operating mode (M1-M6) of the working machine (1) as one of at least two operating modes as a function of at least one variable (V1-V6) chosen from:
a 'driver presence' variable (V2) representing the presence of a person on a driver's seat of the working machine (1);
a 'loading mode active' variable (V4) representing the activity of the load-handling device;
a 'stabilizer' variable (V5) representing the position of one or more stabilizers;
a 'charging' variable' (V6) representing the state of a button actuating charging mode; and
a 'control activity' variable (V1) representing the activity of the first control member and/or of the second control member;
- determining a state of charge of the energy storage unit (10); and
- controlling the fuel cell (18) using a predetermined set point (C1-C4) as a function of the state of charge of the energy storage unit (10) and the operating mode (M1-M6) of the working machine (1) so determined.

2. The method as claimed in claim 1 of controlling a fuel cell (18) in which one of the operating modes is an idling mode (M2) that is determined by means of the 'driver presence' variable (V2) and the 'control activity' variable (V1).

3. The method as claimed in claim 2 of controlling a fuel cell (18) in which the method comprises the following steps:
- receiving the 'driver presence' variable (V2) and the 'control activity' variable (V1), the 'driver presence' variable (V2) being adapted to assume a first value when a person is present on a driver's seat of the working machine (1) and a second value when nobody is present on the driver's seat, the 'control activity' variable (V1) being adapted to assume a first value when the first control member (9) and the second control member (15) have not been activated by a user and adapted to assume a second value when the first control member (9) or the second control member (15) has been activated by a user;
- determining that the operating mode is the idling mode (M2) when the 'control activity' variable is equal to the first value and the 'driver presence' variable (V2) is equal to the second value.

4. The method as claimed in any one of claims 1 to 3 of controlling a fuel cell (18) in which one of the operating modes is a charging mode (M1) that is determined by means of the 'driver presence' variable (V2), the 'control activity' variable (V1) and the 'charging' variable' (V6).

5. The method as claimed in claim 4 of controlling a fuel cell (18) in which the method comprises the following steps:
- receiving the 'driver presence' variable (V2), the 'control activity' variable (V1) and the 'charging' variable' (V6), the 'driver presence' variable (V2) being adapted to assume a first value when a person is present on a seat of the machine and a second value when nobody is present on the seat, the 'charging' variable' (V6) being adapted to assume a first value when the button actuating charging mode is in the active state and a second value when the button actuating charging mode is in the inactive state, the 'control activity' variable (V1) being adapted to assume a first value when the first control member (9) and the second control member (15) are in a neutral position and adapted to assume a second value when the first control unit (9) or the second control unit (15) is in an active position;
- determining that the operating mode is the charging mode (M1) when the 'control activity' variable (V1) is equal to the first value, the 'driver presence' variable (V2) is equal to the first value and the 'charging' variable' is equal to the first value.

6. The method as claimed in any one of claims 1 to 5 of controlling a fuel cell (18) in which one of the operating modes is a charging mode (M5) that is determined by means of a 'machine speed' variable (V3) representing the speed of movement of the working machine (1), the 'control activity' variable (V1) and the 'loading mode active' variable (V4).

7. The method as claimed in claim 6 of controlling a fuel cell (18) in which the method comprises the following steps:
- receiving the 'machine speed' variable (V3), the 'control activity' variable and the 'loading mode active' variable (V4), the 'loading mode active' variable (V4) being adapted to assume a first value in response to the detection of a hydraulic flowrate set point of a cylinder for tilting the tool in a predetermined range for a duration greater than a predetermined duration threshold and to the detection of an angle of the arm in a predetermined range and adapted to assume a second value in the contrary case, the 'control activity' variable (V1) being adapted to assume a first value when the first control member (9) and the second control member (15) are in a neutral position and adapted to assume a second value when the first control member (9) or the second control member (15) is in an active position;
- comparing the 'machine speed' variable (V3) to a predetermined machine speed threshold (S2);
- determining that the operating mode is the charging mode when the 'control activity' variable (V1) is equal to the second value, the 'machine speed' variable (V3) has a value below the predetermined machine speed threshold (S2) and the 'loading mode active' variable (V4) is equal to the first value.

8. The method as claimed in any one of claims 1 to 7 of controlling a fuel cell (18) in which one of the operating modes is a handling mode (M4) determined by means of a 'machine speed' variable (V3) representing the speed of movement of the working machine (1), the 'control activity' variable (V1), the 'loading mode active' variable (V4) and the 'stabilizer' variable (V5).

9. The method as claimed in claim 8 of controlling a fuel cell (18) in which the method comprises the following steps:
- receiving the 'machine speed' variable (V3), the 'control activity' variable (V1), the 'loading mode active' variable (V4) and the 'stabilizer' variable (V5), the 'loading mode active' variable (V4) being adapted to assume a first value in response to the detection of a hydraulic flowrate set point of a cylinder for tilting the tool (7) in a predetermined range for a duration greater than a predetermined duration threshold and to the detection of an angle of the arm (5) in a predetermined range to assume a second value in the contrary case, the 'stabilizer' variable (V5) being adapted to assume a first value when at least one stabilizer (9) is in an operating position and adapted to assume a second value when no stabilizer (9) is in the operating position, the 'control activity' variable (V1) being adapted to assume a first value when the first control member (9) and the second control member (15) are in a neutral position and adapted to assume a second value when the first control member (9) or the second control member (15) is in an active position;
- comparing the 'machine speed' variable (V3) to a predetermined machine speed threshold (S2);
- determining that the operating mode is the handling mode (M4) when the 'control activity' variable (V1) is equal to the second value, the 'machine speed' variable (V3) has a value below the predetermined machine speed threshold (S2), the 'load handling device activity' variable is equal to the first value and the 'stabilizer' variable (V5) is equal to the second value.

10. The method as claimed in any one of claims 1 to 9 of controlling a fuel cell (18) in which the step of controlling the fuel cell (18) includes the following sub-steps:
- comparing the state of charge determined to a state of charge threshold (L1-L6);
- when the load state is above the load state threshold (L1-L6) controlling the fuel cell (18) using a predetermined set point (C1-C4) having a first set point value;
- when the state of charge is below the state of charge threshold (L1-L6) controlling the fuel cell (18) using a predetermined set point (C1-C4) having a second set point value, the second set point value being higher than the first set point value.

11. The method as claimed in any one of claims 1 to 9 of controlling a fuel cell (18) in which the step of determination of the state of charge includes the following sub-steps:
- determining the state of charge at a time t;
- determining the state of charge at a time t+dt, dt being a predetermined time interval;
- comparing the state of charge at time t and the state of charge at time t+dt;
- when the state of charge at time t+dt is lower than the state of charge at time t, determining that the energy storage unit (10) is in the discharging phase (SOC-);
- when the state of charge at time t+dt is greater than the state of charge at time t determining that the energy storage unit (10) is in the charging phase (SOC+);
wherein the step of controlling the fuel cell (18) includes in the discharging phase (SOC-) of the energy storage unit (10) the following sub-steps:
- comparing the state of charge determined to a first state of charge threshold (L1-L6);
- when the state of charge is above the first state of charge threshold controlling the fuel cell (18) using a predetermined set point having a first set point value (C1-C4);
- when the state of charge is below the first state of charge threshold controlling the fuel cell (18) using a predetermined set point having a second set point value, the second set point value being higher than the first set point value;
and wherein the step of controlling the fuel cell (18) includes in the charging phase (SOC+) of the energy storage unit (10) the following sub-steps:
- comparing the state of charge determined to a second state of charge threshold (L1-L6), the first state of charge threshold being different from the second state of charge threshold;
- when the state of charge is above the second state of charge threshold controlling the fuel cell (18) using a predetermined set point (C1-C4) having the first set point value;
- when the state of charge is below the second state of charge threshold controlling the fuel cell (18) using a predetermined set point (C1-C4) having the second set point value.

12. The method as claimed in claim 10 or claim 11 of controlling a fuel cell (18) in which the first and second set point values correspond to two of the following set point values:
- a 'nil' set point value (C1) for which the fuel cell (18) is shut down;
- an 'idling' set point value (C2) corresponding to a power delivered by the fuel cell (18) between 2 and 25% inclusive of a maximum power of the fuel cell (18);
- an 'average' set point value (C3) corresponding to a power delivered by the fuel cell (18) between 25 and 85% inclusive of the maximum power of the fuel cell (18);
- a 'maximum' set point value (C4) corresponding to a power delivered by the fuel cell (18) greater than 85% of the maximum power of the fuel cell combustible (18).

13. The method as claimed in claim 12 of controlling a fuel cell (18) in which the 'average' set point value (C3) is adjusted during the service life of the working machine (1) in accordance with the following steps:
- initializing the 'average' set point value (C3) to a predetermined initial set point value;
- calculating an average power delivered during one or more cycles of activity of the working machine (1);
- modifying the 'average' set point value (C3) as a function of the calculated average power.

14. A control unit (14) intended for a working machine (1) including a load-handling device formed of an arm (5) and a tool (7), at least one electric motor (11) that is configured to move the working machine (1) and/or to actuate the load-handling device, an energy storage unit (10) configured to supply the electric motor (11) with energy, a fuel cell (18) that is connected to the energy storage unit (10) and is configured to charge the energy storage unit (10), a first control member (9) configured to control the electric motor (11) and a second control member (15) configured to control the load-handling device, the control unit (14) being configured:
- to determine an operating mode (M1-M6) of the working machine (1) from at least two operating modes as a function of at least one variable chosen from:
a 'driver presence' variable (V2) representing the presence of a person on a driver's seat of the working machine (1);
a 'loading mode active' variable (V4) representing the activity of the load-handling device;
a 'stabilizer' variable (V5) representing the position of one or more stabilizers;
a 'charging' variable' (V6) representing the state of a button actuating charging mode; and
a 'control activity' variable (V1) representing the activity of the first control member (9) and of the second control member (15);
- determining a state of charge of the energy storage unit (10); and
- controlling the fuel cell (18) using a predetermined set point (C1-C4) as a function of the state of charge of the energy storage unit (10) and of the operating mode (M1-M6) of the working machine so determined.

15. A computer program product comprising program code instructions for the execution of the steps of a control method as claimed in any one of claims 1 to 13 when said program is executed by a control unit (14).

16. A working machine (1) including a load-handling device formed of an arm (5) and a tool (7), at least one electric motor (11) that is configured to move the working machine (1) and/or to actuate the load-handling device, an energy storage unit (10) configured to supply the electric motor (11) with energy, a fuel cell (18) that is connected to the energy storage unit (10) and is configured to charge the energy storage unit (10), a first control member (9) configured to control the electric motor (11) and a second control member (15) configured to control the load-handling device, and in which the working machine (1) comprises a control unit (14) as claimed in claim 14.
